# EUROPEAN PATENT APPLICATION

(11) **EP 4 280 677 A1**
(43) Date of publication of application: **22.11.2023**
(21) Application number: 21929517.7
(22) Date of filing: 09.03.2021
(51) Int. Cl.: H04W 28/16

(54) **COMMUNICATION METHOD AND APPARATUS**

(71) Applicant: Huawei Technologies Co., Ltd., Shenzhen, Guangdong 518129 (CN)
(72) Inventor: PAN, Xiaodan, Shenzhen, Guangdong 518129 (CN); WANG, Nanxin, Shenzhen, Guangdong 518129 (CN); PENG, Wenjie, Shenzhen, Guangdong 518129 (CN)
(74) Representative: Gill Jennings & Every LLP
(86) International application number: PCT/CN2021/079796
(87) International publication number: WO 2022/188035

(57) **Abstract**

This application provides a communication method and apparatus, to provide a communication method for UE to UE (U2U) relay data transmission. In the method, a bearer configuration solution of a first sidelink and a bearer configuration solution of a second sidelink is provided, to meet an end-to-end quality of service requirement of data relay transmission. This increases a transmission distance of a user.

## Description

### TECHNICAL FIELD

This application relates to the communication field, and more specifically, to a communication method and apparatus in a relay scenario.

### BACKGROUND

Vehicle-to-everything (Vehicle-to-Everything, V2X) is one of fields having biggest industry potential and clearest requirements in an internet of things system, and has features such as wide application space, large industry potential, and strong social benefits. Vehicle-to-everything collects vehicle information via devices such as a vehicle-mounted sensor and a vehicle-mounted terminal, and implements communication between vehicles, a vehicle and a person, a vehicle and roadside infrastructure, and a vehicle and a network by using a V2X communication technology. Vehicle-to-everything will become a basic part of an intelligent transportation system in the future.

In a V2X system, user equipments (User Equipments, UEs) communicate with each other over a sidelink (Sidelink, SL). When the UEs directly communicate with each other over the sidelink, a communication distance is limited due to a factor such as an insufficient hardware capability of a transmitting-side UE. To resolve this problem, a UE to UE (UE to UE, U2U) relay technology is introduced. A U2U relay system includes a near-end device, a relay device, and a far-end device. A first sidelink (SL 1) between the near-end device and the relay device and a second sidelink (SL 2) between the relay device and the far-end device each perform communication through a sidelink interface (which is also referred to as a PC5 interface). However, when the near-end device and the relay device separately use a conventional method to perform sidelink radio bearer (Sidelink Radio Bearer, SLRB) configuration by using their respective base stations or their respective default configuration information, there is a problem that U2U data transmission cannot meet a quality of service (Quality of Service, QoS) parameter requirement of end-to-end transmission.

### SUMMARY

Embodiments of this application disclose a communication method and apparatus, so that in a U2U relay communication system, SLRBs on a plurality of sidelinks in a relay transmission link can be configured based on quality of service requirement information. In this way, U2U data transmission can meet a QoS parameter requirement of end-to-end transmission.

A first aspect of embodiments of this application discloses a communication method, including: A relay communication apparatus receives a first message from a first communication apparatus. The first message includes first parameter information and configuration information of at least one radio link control (RLC) bearer on a first sidelink between the relay communication apparatus and the first communication apparatus. The configuration information of the at least one RLC bearer on the first sidelink is determined based on first quality of service (QoS) parameter information on the first sidelink. The relay communication apparatus sends a second message to a second communication apparatus. The second message includes configuration information of one RLC bearer on a second sidelink between the relay communication apparatus and the second communication apparatus. The configuration information of the one RLC bearer on the second sidelink is determined based on the first parameter information.

According to the method, SLRBs on the first sidelink and the second sidelink can be configured based on quality of service requirement information, so that in a U2U relay communication system, data transmission between the first communication apparatus and the second communication apparatus via the relay communication apparatus can meet an end-to-end QoS parameter requirement from the first communication apparatus to the second communication apparatus.

With reference to the first aspect, in some implementations of the first aspect, the first message further includes first identifier information, and the first identifier information identifies the second communication apparatus. For example, when the first communication apparatus needs to communicate with the second communication apparatus via the relay communication apparatus, the relay communication apparatus does not know that current bearer configuration is used for communication with which communication apparatus. The first communication apparatus sends the first identifier information to the relay communication apparatus by using the first message, so that the relay communication apparatus can learn, based on the first identifier information, that current bearer configuration information is used for communication between the first communication apparatus and the second communication apparatus.

With reference to the first aspect, in some implementations of the first aspect, the first parameter information includes second QoS parameter information. The second QoS parameter information includes a QoS parameter requirement that should be met by a QoS flow of the at least one RLC bearer when the QoS flow (flow) of the at least one RLC bearer on the first sidelink is transmitted on the second sidelink. Alternatively, the first parameter information includes second identifier information. The second identifier information includes PC5 quality of service flow identifier (PFI) information corresponding to the at least one RLC bearer on the first sidelink. The PFI information is used by the relay communication apparatus to determine second QoS parameter information. The second QoS parameter information includes a QoS parameter requirement that should be met by a QoS flow of the at least one RLC bearer when the QoS flow (flow) of the at least one RLC bearer on the first sidelink is transmitted on the second sidelink. In this way, the relay communication apparatus can determine, based on QoS parameter information respectively corresponding to an RLC bearer on the second sidelink, a QoS parameter requirement that should be met by the second sidelink, to prepare for mapping N bearers on the first sidelink to one bearer on the second sidelink.

With reference to the first aspect, in some implementations of the first aspect, the relay communication apparatus determines third QoS parameter information based on the second QoS parameter information. The third QoS parameter information is used by the relay communication apparatus to determine the configuration information of the one RLC bearer on the second sidelink.

With reference to the first aspect, in some implementations of the first aspect, the first QoS parameter information and the third QoS parameter information meet a requirement of fourth QoS parameter information. The fourth QoS parameter information is end-to-end QoS parameter information that needs to be met when the first communication apparatus sends data to the second communication apparatus.

With reference to the first aspect, in some implementations of the first aspect, that the relay communication apparatus determines third QoS parameter information based on the second QoS parameter information includes any one of the following manners: selecting, from the second QoS parameter information, QoS parameter information corresponding to a QoS flow (flow) having a highest priority as the third QoS parameter information; selecting, from the second QoS parameter information, QoS parameter information corresponding to a QoS flow having a lowest packet delay budget as the third QoS parameter information; selecting, from the second QoS parameter information, QoS parameter information corresponding to a QoS flow having a highest guaranteed flow bit rate requirement as the third QoS parameter information; selecting, from the second QoS parameter information, QoS parameter information corresponding to a QoS flow having a requirement for a lowest packet error rate as the third QoS parameter information; selecting, from the second QoS parameter information, QoS parameter information having a highest requirement on each item as the third QoS parameter information; or selecting, from the second QoS parameter information, an average value of one or more QoS parameters as the third QoS parameter information. In this way, after the relay communication apparatus maps the N bearers on the first sidelink to the one bearer on the second sidelink, a QoS parameter on the first sidelink and a QoS parameter on the second sidelink can meet an end-to-end quality of service requirement of data transmission from the first communication apparatus to the second communication apparatus.

With reference to the first aspect, in some implementations of the first aspect, the relay communication apparatus determines the configuration information of the one RLC bearer on the second sidelink based on the third QoS parameter information. That the relay communication apparatus determines the configuration information of the one RLC bearer on the second sidelink based on the third QoS parameter information includes any one of the following operations. When the relay communication apparatus is in a connected state, the relay communication apparatus sends the third QoS parameter information to a network device, and receives the configuration information that is of the one RLC bearer on the second sidelink and that is determined by the network device based on the third QoS parameter information. When the relay communication apparatus is in an idle state or an inactive state, the relay communication apparatus determines the configuration information of the one RLC bearer on the second sidelink based on bearer configuration information in a system message broadcast by a network device. When the relay communication apparatus is located outside a cell coverage area, the relay communication apparatus determines the configuration information of the one RLC bearer on the second sidelink based on preconfigured bearer configuration information. In this way, the relay communication apparatus may determine corresponding bearer configuration information based on corresponding QoS parameter information when the relay communication apparatus is in the connected state, in the idle state, in the inactive state, or outside the cell coverage area.

With reference to the first aspect, in some implementations of the first aspect, the relay communication apparatus receives a first data unit from the first communication apparatus. The first data unit carries third identifier information, and the third identifier information identifies a bearer between the first communication apparatus and the second communication apparatus. In this way, the relay communication apparatus may send the first data unit to the second communication apparatus based on the third identifier information.

With reference to the first aspect, in some implementations of the first aspect, the first message further includes third identifier information. The third identifier information identifies a bearer between the first communication apparatus and the second communication apparatus, and there is a correspondence between the third identifier information and the at least one RLC bearer on the first sidelink. The first message carries the third identifier information, so that data does not need to carry the third identifier information when the data is transmitted on the first sidelink. In this way, data overheads are reduced, and transmission efficiency is improved.

With reference to the first aspect, in some implementations of the first aspect, the relay communication apparatus receives a first data unit from the first communication apparatus, and sends, to the second communication apparatus, a first data unit to which the third identifier information is added.

A second aspect of embodiments of this application discloses a communication method, including: A first communication apparatus generates a first message, and sends the first message to a relay communication apparatus. The first message includes first parameter information and configuration information of at least one RLC bearer on a first sidelink. The first sidelink is a communication link between the first communication apparatus and the relay communication apparatus. The first parameter information is used to determine configuration information of one RLC bearer on a second sidelink between the relay communication apparatus and a second communication apparatus. The configuration information of the at least one RLC bearer on the first sidelink is determined based on first quality of service (QoS) parameter information on the first sidelink.

According to the method, SLRBs on the first sidelink and the second sidelink can be configured based on quality of service requirement information, so that in a U2U relay communication system, data transmission between the first communication apparatus and the second communication apparatus by using the relay communication apparatus can meet an end-to-end QoS parameter requirement from the first communication apparatus to the second communication apparatus.

With reference to the second aspect, in some implementations of the second aspect, the first communication apparatus sends a third message to the second communication apparatus via the relay communication apparatus. The third message includes first configuration information, and the first configuration information includes configuration information of the packet data convergence protocol (PDCP) and the service data adaptation protocol (SDAP) that are needed for transmission between the first communication apparatus and the second communication apparatus.

With reference to the second aspect, in some implementations of the second aspect, the third message further includes third identifier information. The third identifier information identifies a bearer between the first communication apparatus and the second communication apparatus, and there is a correspondence between the third identifier information and the first configuration information.

With reference to the second aspect, in some implementations of the second aspect, the first message further includes first identifier information, and the first identifier information identifies the second communication apparatus. For example, when the first communication apparatus needs to communicate with the second communication apparatus via the relay communication apparatus, the relay communication apparatus does not know that current bearer configuration is used for communication with which communication apparatus. The first communication apparatus sends the first identifier information to the relay communication apparatus by using the first message, so that the relay communication apparatus can learn, based on the first identifier information, that current bearer configuration information is used for communication between the first communication apparatus and the second communication apparatus.

With reference to the second aspect, in some implementations of the second aspect, the first parameter information includes second QoS parameter information. The second QoS parameter information includes a QoS parameter requirement that should be met by a QoS flow of the at least one RLC bearer when the QoS flow of the at least one RLC bearer on the first sidelink is transmitted on the second sidelink. Alternatively, the first parameter information includes second identifier information. The second identifier information includes PC5 quality of service flow identifier (PFI) information corresponding to the at least one RLC bearer on the first sidelink. The PFI information is used by the relay communication apparatus to determine second QoS parameter information. The second QoS parameter information includes a QoS parameter requirement that should be met by a QoS flow of the at least one RLC bearer when the QoS flow of the at least one RLC bearer on the first sidelink is transmitted on the second sidelink. In this way, the relay communication apparatus may determine, based on QoS parameter information respectively corresponding to an RLC bearer on the second sidelink, a QoS parameter requirement that should be met by the second sidelink, to prepare for mapping N bearers on the first sidelink to one bearer on the second sidelink.

With reference to the second aspect, in some implementations of the second aspect, the configuration information of the at least one RLC bearer on the first sidelink is determined based on the first QoS parameter information on the first sidelink. For example: When the first communication apparatus is in a connected state, the first communication apparatus sends the first QoS parameter information to a network device, and receives the configuration information that is of the at least one RLC bearer on the first sidelink and that is determined by the network device based on the first QoS parameter information. When the first communication apparatus is in an idle state or an inactive state, the first communication apparatus determines the configuration information of the at least one RLC bearer on the first sidelink based on bearer configuration information in a system message broadcast by a network device. When the first communication apparatus is located outside a cell coverage area, the first communication apparatus determines the configuration information of the at least one RLC bearer on the first sidelink based on preconfigured bearer configuration information. In this way, after the relay communication apparatus maps the N bearers on the first sidelink to the one bearer on the second sidelink, the first QoS parameter information on the first sidelink and third QoS parameter information on the second sidelink may meet a requirement of fourth QoS parameter information from the first communication apparatus to the second communication apparatus.

With reference to the second aspect, in some implementations of the second aspect, the first communication apparatus sends a first data unit to the relay communication apparatus. The first data unit carries the third identifier information, and the third identifier information identifies the bearer between the first communication apparatus and the second communication apparatus.

With reference to the second aspect, in some implementations of the second aspect, the first message further includes third identifier information. The third identifier information identifies the bearer between the first communication apparatus and the second communication apparatus, and there is a correspondence between the third identifier information and the at least one RLC bearer on the first sidelink. Because the first message carries the third identifier information, the relay communication apparatus may include the third identifier information in data transmitted on the second sidelink. Therefore, data does not need to carry the third identifier information when the data is transmitted on the first sidelink. In this way, data overheads are reduced, and transmission efficiency is improved.

A third aspect of embodiments of this application discloses a communication method, including: A second communication apparatus receives a second message from a relay communication apparatus. The second message includes configuration information of one radio link control (RLC) bearer on a second sidelink between the second communication apparatus and the relay communication apparatus. The second communication apparatus performs communication with the relay communication apparatus based on the configuration information of the one RLC bearer on the second sidelink.

With reference to the third aspect, in some implementations of the third aspect, the second communication apparatus receives a third message from a first communication apparatus. The third message includes first configuration information, and the first configuration information includes configuration information of the packet data convergence protocol (PDCP) and the service data adaptation protocol (SDAP) that are needed for transmission between the first communication apparatus and the second communication apparatus.

With reference to the third aspect, in some implementations of the third aspect, the third message further includes third identifier information. The third identifier information identifies a bearer between the first communication apparatus and the second communication apparatus, and there is a correspondence between the third identifier information and the first configuration information.

With reference to the third aspect, in some implementations of the third aspect, the second communication apparatus receives a first data unit from the relay communication apparatus. The first data unit carries the third identifier information, and there is the correspondence between the third identifier information and the first configuration information.

A fourth aspect of embodiments of this application provides a communication apparatus. The communication apparatus is used in a relay communication apparatus and includes a module configured to perform the method described in any one of the first aspect or the possible implementations of the first aspect.

A fifth aspect of embodiments of this application provides a communication apparatus. The communication apparatus is used in a first communication apparatus and includes a module configured to perform the method described in any one of the second aspect or the possible implementations of the second aspect.

A sixth aspect of embodiments of this application provides a communication apparatus. The communication apparatus is used in a second communication apparatus and includes a module configured to perform the method described in any one of the third aspect or the possible implementations of the third aspect.

A seventh aspect of embodiments of this application provides a communication apparatus. The communication apparatus is used in a relay communication apparatus and includes a processor and an interface circuit. The interface circuit is configured to receive a signal from an apparatus other than the apparatus and transmit the signal to the processor, or send a signal from the processor to an apparatus other than the apparatus. The processor is configured to implement the method described in the first aspect or the possible implementations of the first aspect by using a logic circuit or executing code instructions.

An eighth aspect of embodiments of this application provides a communication apparatus. The communication apparatus is used in a first communication apparatus and includes a processor and an interface circuit. The interface circuit is configured to receive a signal from an apparatus other than the apparatus and transmit the signal to the processor, or send a signal from the processor to an apparatus other than the apparatus. The processor is configured to implement the method described in the second aspect or the possible implementations of the second aspect by using a logic circuit or executing code instructions.

A ninth aspect of embodiments of this application provides a communication apparatus. The communication apparatus is used in a second communication apparatus and includes a processor and an interface circuit. The interface circuit is configured to receive a signal from an apparatus other than the apparatus and transmit the signal to the processor, or send a signal from the processor to an apparatus other than the apparatus. The processor is configured to implement the method described in the third aspect or the possible implementations of the third aspect by using a logic circuit or executing code instructions.

A tenth aspect of embodiments of this application provides a computer-readable storage medium. The computer-readable storage medium stores a computer program or instructions. When the computer program or the instructions are executed by a computing device, the method described in the first aspect or the possible implementations of the first aspect is implemented, the method described in the second aspect or the possible implementations of the second aspect is implemented, or the method described in the third aspect or the possible implementations of the third aspect is implemented.

An eleventh aspect of embodiments of this application provides a computer program product. The computer program product includes a computer program or instructions. When the computer program or the instructions are executed by a computing device, the method described in the first aspect or the possible implementations of the first aspect is implemented, the method described in the second aspect or the possible implementations of the second aspect is implemented, or the method described in the third aspect or the possible implementations of the third aspect is implemented.

A twelfth aspect of embodiments of this application provides a communication system. The communication system includes one or more of the following: the communication apparatus according to any one of the fourth aspect to the ninth aspect, the computer-readable storage medium according to the tenth aspect, and the computer program product according to the eleventh aspect.

### BRIEF DESCRIPTION OF DRAWINGS

FIG. 1 is a schematic architectural diagram of a communication system according to an embodiment of this application;
FIG. 2 is a schematic diagram of a possible user plane protocol stack according to an embodiment of this application;
FIG. 3 is a schematic flowchart of a communication method according to an embodiment of this application;
FIG. 4 is another schematic flowchart of a communication method according to an embodiment of this application;
FIG. 5 is still another schematic flowchart of a communication method according to an embodiment of this application;
FIG. 6 is yet another schematic flowchart of a communication method according to an embodiment of this application;
FIG. 7 is still yet another schematic flowchart of a communication method according to an embodiment of this application;
FIG. 8 is a schematic block diagram of a communication apparatus according to an embodiment of this application;
FIG. 9 is another schematic block diagram of a communication apparatus according to an embodiment of this application;
FIG. 10 is still another schematic block diagram of a communication apparatus according to an embodiment of this application; and
FIG. 11 is yet another schematic block diagram of a communication apparatus according to an embodiment of this application.

### DESCRIPTION OF EMBODIMENTS

The following describes technical solutions in this application with reference to accompanying drawings.

For example, for ease of understanding of embodiments of this application, concepts in embodiments of this application are described below.
1. Sidelink (sidelink, SL): An example in which a communication apparatus related to a sidelink is a UE is used. A wireless communication link between UEs is referred to as a sidelink. A typical application scenario of sidelink communication is vehicle-to-everything. In vehicle-to-everything, each vehicle may be considered as one UE, and data transmission may be directly performed between UEs over a sidelink without using a wireless network device. In this way, a communication delay can be effectively reduced. The sidelink supports broadcast, unicast, and multicast.
2. Broadcast: Broadcast communication is similar to broadcasting a system message by a wireless network device. To be specific, a UE sends data of a broadcast service to the outside without encryption. Any other UE within an effective reception range may receive the data of the broadcast service if the UE is interested in the broadcast service.
3. Unicast: Unicast communication is similar to data communication performed after a radio resource control (radio resource control, RRC) connection is established between a UE and a wireless network device, and a unicast connection needs to be first established between two UEs. After the unicast connection is established, the two UEs may perform data communication based on a negotiated identifier, where data may be encrypted or may not be encrypted. Compared with the broadcast, the unicast communication can be performed only between two UEs that have established a unicast connection.
4. Multicast: Multicast communication is communication between all UEs in a communication group, and any UE in the group can receive and send data of a multicast service.
5. A 5G quality of service flow (5G Quality of Service QoS flow, 5G QoS flow), referred to as a QoS flow for short, is a minimum granularity of end-to-end transmission QoS control in a 5G system. All data mapped to a same 5G QoS flow may be forwarded in a same manner, for example, a scheduling policy, a queue management policy, a rate shaping policy, and radio link control (Radio Link Control RLC) protocol configuration. If different QoS control or processing needs to be performed on to-be-transmitted data, the to-be-transmitted data needs to be divided into different QoS flows.
6. RLC bearer: In the New Radio (NR) standard protocol, a base station may configure, by using an information element (for example, RLC-BearerConfig) in an RRC message, an RLC entity and a logical channel that are associated with a radio bearer. Usually, the RLC entity and the logical channel that are associated with the radio bearer are referred to as an RLC bearer. Configuration parameters of the RLC bearer may include RLC entity configuration, a logical channel identifier (logical channel identifier, LCID), logical channel configuration, and an associated bearer identifier. Similarly, for an NR sidelink, the base station may configure, by using an information element (for example, SL-RLC-BearerConfig) in an RRC message, an RLC entity and a logical channel that are associated with an SLRB. Usually, the RLC entity and the logical channel that are associated with the SL radio bearer are referred to as an SL RLC bearer.

It should be understood that, in embodiments of this application, sequence numbers of processes do not mean execution sequences. The execution sequences of the processes should be determined based on functions and internal logic of the processes, and should not constitute a limitation on implementation processes of embodiments of this application.

It should be understood that, in embodiments of this application, a term is generally numbered for ease of differentiation, and the numbering does not mean that the term has a difference in order or priority, for example, "first identifier information" and "second identifier information". Usually, "first" and "second" are only used to distinguish between the two groups of information, and should not constitute a limitation on implementation processes of embodiments of this application.

It should be understood that, in embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

It should be understood that, in embodiments of this application, the terms "system" and "network" are usually used interchangeably in this specification.

It should be understood that, in embodiments of this application, the term "and/or" is usually used to describe an association relationship between associated objects and represents that three relationships may exist. For example, A and/or B may represent the following three cases: Only A exists, both A and B exist, and only B exists. It should be understood that, in embodiments of this application, the character "/" usually indicates an "or" relationship between the associated objects.

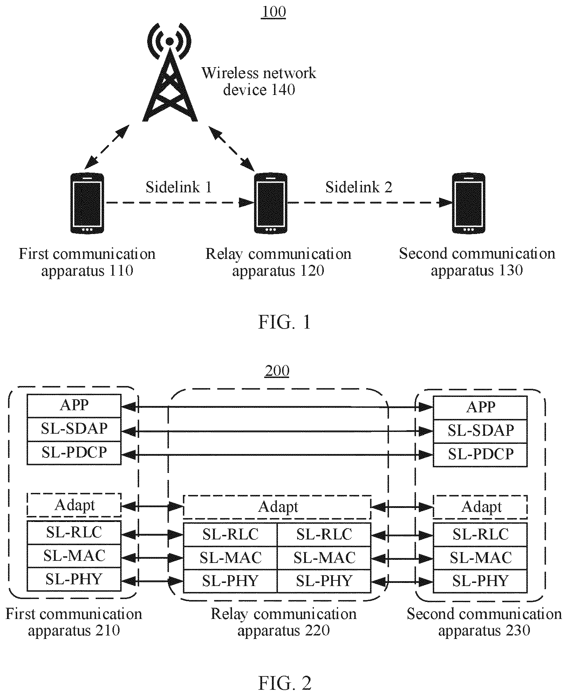

A method and an apparatus provided in embodiments of this application may be used in a communication system shown in FIG. 1. FIG. 1 is a schematic architectural diagram of a U2U relay communication system 100. The communication system 100 includes a first communication apparatus 110, a relay communication apparatus 120, and a second communication apparatus 130. Optionally, the communication system further includes a wireless network device 140. For example, there is a sidelink 1 between the first communication apparatus 110 and the relay communication apparatus 120, and there is a sidelink 2 between the relay communication apparatus 120 and the second communication apparatus 130. The first communication apparatus 110 exchanges signaling and/or data with the second communication apparatus 130 via the relay communication apparatus 120. The first communication apparatus 110 may have a communication connection to the wireless network device 140, and the second communication apparatus 120 may also have a communication connection to the wireless network device 140. Optionally, the first communication apparatus 110 and the relay communication apparatus 120 may have communication connections to different wireless network devices.

For example, the relay communication apparatus, the first communication apparatus, and the second communication apparatus each are a device having a wireless transceiver function. For example, the device may be a vehicle-mounted communication apparatus, a vehicle-mounted communication chip, a roadside unit, or a communication apparatus in a roadside unit, or may be a UE, an access terminal, a subscriber unit, a subscriber station, a mobile station, a mobile console, a remote station, a remote terminal, a mobile device, a user terminal, a terminal, a wireless communication device, a user agent, or a user apparatus. Alternatively, the relay communication apparatus, the first communication apparatus, and the second communication apparatus each may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function, another processing device connected to a wireless modem, a vehicle-mounted device, a wearable device, a terminal device in a 5G network, a terminal device in a future evolved public land mobile communication network (public land mobile network, PLMN), or the like. This is not limited in embodiments of this application.

For example, the wireless network device in embodiments of this application may be any device having a communication transceiver function. For example, the wireless network device may be a device that provides a wireless communication function service for a communication apparatus, usually located on a network side, and includes but is not limited to: a next generation base station (gNodeB, gNB) in a 5th generation (5th generation, 5G) communication system, an evolved NodeB (evolved NodeB, eNB) in an LTE system, a device that provides a wireless communication service for a terminal device and that is in a V2X communication system, a radio controller in a cloud radio access network (cloud radio access network, CRAN) scenario, a relay station, a vehicle-mounted device, a wearable device, a network device in a future evolved network, or the like. A specific implementation form is not limited in embodiments of this application.

Alternatively, in embodiments of this application, the wireless network device may be a device in a RAN, in other words, a RAN node that connects a communication apparatus to a wireless network. For example, by way of example, and not limitation, the following may be listed as a base station: a gNB, a transmission reception point (transmission reception point, TRP), a transmitting point (transmitting point, TP), an evolved NodeB (evolved NodeB, eNB), a home base station (for example, a home evolved NodeB or a home NodeB, HNB), a baseband unit (baseband unit, BBU), or the like. In a network structure, a wireless network device may include a central unit (central unit, CU) node, a distributed unit (distributed unit, DU) node, a RAN device including a CU node and a DU node, or a control plane CU node, a user plane CU node, and a DU node.

The wireless network device provides a service for a cell. A communication apparatus communicates with a base station by using a transmission resource (for example, a frequency domain resource or a time-frequency resource) used by the cell. The cell may be a cell corresponding to the base station. The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features such as small coverage and low transmit power, and are applicable to providing a high-rate data transmission service.

The method and apparatus provided in embodiments of this application may be used in various communication systems, for example, a fourth generation (4th generation, 4G) communication system, a 4.5G communication system, a 5G communication system, a system in which a plurality of communication systems are integrated, or a future evolved communication system (for example, a 5.5G communication system or a 6G communication system), for example, a long term evolution (long term evolution, LTE) system, a new radio (new radio, NR) system, a wireless fidelity (wireless fidelity, Wi-Fi) system, and a communication system related to the 3rd generation partnership project (3rd generation partnership project, 3GPP).

In the U2U relay communication system, the communication system includes two sidelinks: the sidelink 1 and the sidelink 2. For example, in the sidelink 1, the first communication apparatus 110 is a sending apparatus, and the relay communication apparatus 120 is a receiving apparatus. In the sidelink 2, the relay communication apparatus 120 is a sending apparatus, and the second communication apparatus 130 is a receiving apparatus. If an existing SLRB configuration method is used, the first communication apparatus 110 and the relay communication apparatus 120 perform SLRB configuration by using configuration information separately provided by a base station or by using respective default configuration information. In the configuration method, a QoS parameter requirement of end-to-end transmission between the first communication apparatus 110 and the second communication apparatus 130 may not be met when the U2U relay communication system performs data and/or signaling transmission. For example, the first communication apparatus 110 performs bearer configuration on the first sidelink (SL 1) based on a QoS parameter requirement of the first communication apparatus 110. The QoS parameter requirement indicates that when the first communication apparatus 110 performs data transmission with the second communication apparatus 130, the QoS parameter requirement of the end-to-end transmission between the first communication apparatus 110 and the second communication apparatus 130 needs to be met. The relay communication apparatus 120 performs bearer configuration on the second sidelink (SL 2) based on a QoS parameter requirement of the relay communication apparatus 120. The QoS parameter requirement indicates that when the relay communication apparatus 120 performs data transmission with the second communication apparatus 130, a QoS parameter requirement of end-to-end transmission between the relay communication apparatus 120 and the second communication apparatus 130 needs to be met. In this case, in the SLRB configuration method, the QoS requirement of the end-to-end data transmission between the first communication apparatus 110 and the second communication apparatus 130 may not be met. For example, a delay requirement of a QoS parameter of the first communication apparatus 110 and a delay requirement of a QoS parameter of the second communication apparatus 130 are 10 ms. If the first communication apparatus 110 configures the delay requirement of 10 ms for an SLRB on the SL 1, in this case, no matter how an SLRB on the SL 2 is configured, an end-to-end delay between the first communication apparatus 110 and the second communication apparatus 130 cannot be ensured.

Based on FIG. 1, FIG. 2 is a schematic diagram of a user plane protocol stack in a U2U relay communication system according to an embodiment of this application. As shown in FIG. 2, a user plane protocol stack of a first communication apparatus 210 includes an application (Application, APP) layer, a sidelink service data adaptation protocol (SideLink-Service Data adaptation Protocol, SL-SDAP) layer, and a sidelink packet data convergence protocol (SideLink-Packet Data Convergence Protocol, SL-PDCP) layer that perform end-to-end peer-to-peer communication with a second communication apparatus 230. The user plane protocol stack of the first communication apparatus 210 further includes an SL-RLC layer, a sidelink media access control (SideLink-Packet Media Access Control, SL-MAC) layer, and a sidelink physical layer (SideLink-Physical Layer, SL-PHY) that are connected based on a sidelink and that perform peer-to-peer communication with a relay communication apparatus 220. Optionally, the user plane protocol stack of the first communication apparatus 210 further includes an adaptation (Adapt) layer that performs peer-to-peer communication with the relay communication apparatus 220 and the second communication apparatus 230. A user plane protocol stack of the relay communication apparatus 220 includes an SL-RLC layer, an SL-MAC layer, and an SL-PHY layer that are connected based on a PC5 interface and that perform peer-to-peer communication with the first communication apparatus 210, and includes an SL-RLC layer, an SL-MAC layer, and an SL-PHY layer that are connected based on a PC5 interface and that perform peer-to-peer communication with the second communication apparatus 230. Optionally, the user plane protocol stack of the relay communication apparatus 220 further includes an adaptation layer that performs peer-to-peer communication with the first communication apparatus 210 and the second communication apparatus 230. A user plane protocol stack of the second communication apparatus 230 includes an APP layer, an SL-SDAP layer, and an SL-PDCP layer that perform (end-to-end) peer-to-peer communication with the first communication apparatus 210, and includes an SL-RLC layer, an SL-MAC layer, and an SL-PHY layer that are connected based on a PC5 interface and that perform peer-to-peer communication with the relay communication apparatus 220. Optionally, the user plane protocol stack of the second communication apparatus 230 further includes an adaptation layer. For example, in the U2U relay communication system, the relay communication apparatus 220 may establish only an RLC bearer, but does not establish a corresponding SDAP entity and a corresponding PDCP entity. However, bearer mapping between a QoS flow and an SLRB is completed at an SDAP layer. In other words, the relay communication apparatus cannot identify and process remapping of a QoS flow from a bearer on an SL 1 to a bearer on an SL 2. Therefore, after receiving a data packet from the first communication apparatus 210, the relay communication apparatus 220 may not convert a mapping relationship between the QoS flow and an RLC bearer on the SL 1 into a corresponding mapping relationship on the SL 2. Consequently, the relay communication apparatus 220 may not send data to the communication apparatus 230 by using correct RLC bearer configuration. Consequently, data of the QoS flow cannot be correctly mapped to an E2E PDCP entity and the SDAP entity, and an E2E QoS parameter requirement cannot be ensured. Therefore, how to perform SLRB configuration in the U2U relay communication system becomes an urgent problem to be resolved. For the foregoing problem, embodiments of this application provide the following solutions.

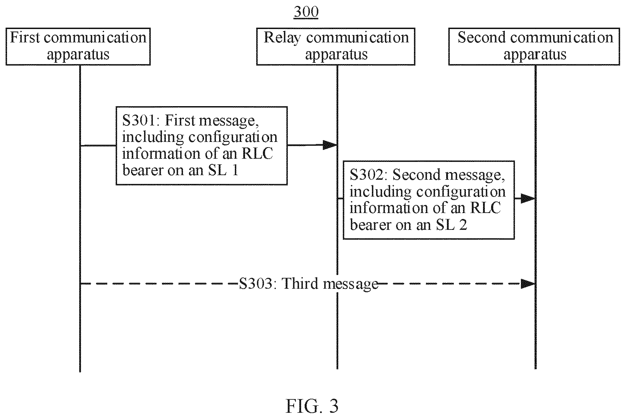

Based on FIG. 1 and FIG. 2, FIG. 3 is a schematic flowchart of a communication method 300 according to an embodiment of this application. The communication method shown in FIG. 3 relates to a first communication apparatus, a relay communication apparatus, and a second communication apparatus. The first communication apparatus, the relay communication apparatus, and the second communication apparatus may be the first communication apparatus, the relay communication apparatus, and the second communication apparatus in FIG. 1 and FIG. 2 in this application. The method 300 includes but is not limited to the following steps.

S301: The first communication apparatus sends a first message to the relay communication apparatus. The first message includes configuration information of an RLC bearer on an SL 1.

For example, the first communication apparatus and the relay communication apparatus each establish at least one RLC bearer on the SL 1 based on the configuration information of the RLC bearer on the SL 1. The configuration information of the RLC bearer on the SL 1 is determined by the first communication apparatus based on QoS parameter information (for example, first QoS parameter information) of the SL 1. When the first communication apparatus sends data to the second communication apparatus, an end-to-end quality of service requirement (for example, fourth QoS parameter information) from the first communication apparatus to the second communication apparatus needs to be met. When the first communication apparatus sends data to the second communication apparatus via the relay communication apparatus, the first communication apparatus may determine, based on the fourth QoS parameter information and a preset algorithm (for example, based on channel state information of the SL 1 and an SL 2), a quality of service requirement (for example, the first QoS parameter information) that needs to be met by the SL 1 and a quality of service requirement (for example, second QoS parameter information) that needs to be met by the SL 2. Alternatively, when the first communication apparatus sends data to the second communication apparatus via the relay communication apparatus, the relay communication apparatus needs to determine, based on the fourth QoS parameter information and a preset algorithm (for example, based on channel state information of the SL 1 and an SL 2), a quality of service requirement (for example, the first QoS parameter information) that needs to be met by the SL 1 and a quality of service requirement (for example, second QoS parameter information) that needs to be met by the SL 2. Then, the relay communication apparatus sends the determined first QoS parameter information and/or second QoS parameter information to the first communication apparatus.

Optionally, the first message further includes first identifier information, and the first identifier information identifies the second communication apparatus. For example, the first identifier information is a device identification number of the second communication apparatus.

For example, because there may be more than one communication apparatus that performs unicast or multicast communication with the relay communication apparatus, when the first communication apparatus communicates with the second communication apparatus via the relay communication apparatus, the relay communication apparatus does not know that current bearer configuration is used for communication with which communication apparatus. The first communication apparatus sends the first identifier information to the relay communication apparatus by using the first message, so that the relay communication apparatus can learn, based on the first identifier information, that current RLC bearer configuration information is used for communication between the first communication apparatus and the second communication apparatus.

Optionally, the first message further includes first parameter information, and the first parameter information is used to determine configuration information of an RLC bearer on the SL 2. The first parameter information includes the second QoS parameter information and/or second identifier information. The second identifier information includes PFI information corresponding to the RLC bearer on the SL 1.

For example, the relay communication apparatus receives the second QoS parameter information sent by the first communication apparatus, and determines the configuration information of the RLC bearer on the SL 2 based on the second QoS parameter information. Alternatively, the relay communication apparatus receives the second identifier information sent by the first communication apparatus, and determines the corresponding second QoS parameter information on the SL 2 based on the PFI information in the second identifier information.

For example, a method for determining, by the relay communication apparatus, the configuration information of the RLC bearer on the SL 2 based on the second QoS parameter information may be any one of the following:
N: 1 bearer mapping, where for example, the relay communication apparatus maps N RLC bearers on the SL 1 to one RLC bearer on the SL 2, and after the mapping is completed, there are N RLC bearers on the SL 1 and one RLC bearer on the SL 2;
1:N bearer mapping, where for example, the relay communication apparatus maps one RLC bearer on the SL 1 to N RLC bearers on the SL 2, and after the mapping is completed, there are N RLC bearers on the SL 1 and one RLC bearer on the SL 2;
1: 1 bearer mapping, where for example, the relay communication apparatus maps one RLC bearer on the SL 1 to one RLC bearer on the SL 2, and after the mapping is completed, there is one RLC bearer on the SL 1 and one RLC bearer on the SL 2; or
N:M bearer mapping, where for example, the relay communication apparatus maps N RLC bearers on the SL 1 to M RLC bearers on the SL 2, and after the mapping is completed, there are N RLC bearers on the SL 1 and M RLC bearers on the SL 2.

Optionally, the first message further includes third identifier information. The third identifier information identifies a bearer between the first communication apparatus and the second communication apparatus. There is a correspondence between the third identifier information and the RLC bearer on the SL 1. For example, a third identifier is a bearer identifier of the bearer between the first communication apparatus and the second communication apparatus.

For example, the relay communication apparatus may include the third identifier information in data received from the first communication apparatus, and then send data that carries the third identifier information to the second communication apparatus. After receiving the third identifier information, the second communication apparatus may map the data to a corresponding PDCP based on the correspondence between the third identifier information and the RLC bearer.

Alternatively, the first identifier information, the first parameter information, and the third identifier information may be sent by the first communication apparatus to the second communication apparatus by using another message.

S302: The relay communication apparatus sends a second message to the second communication apparatus. The second message includes the configuration information of the RLC bearer on the SL 2.

For example, the relay communication apparatus needs to send the determined configuration information of the RLC bearer on the SL 2 to the second communication apparatus, so that the relay communication apparatus and the second communication apparatus each can establish at least one RLC bearer on the SL 2 based on the configuration information of the RLC bearer on the SL 2.

Optionally, the second message further includes the third identifier information. The third identifier information identifies the bearer between the first communication apparatus and the second communication apparatus. For example, the third identifier is a bearer number of the bearer between the first communication apparatus and the second communication apparatus.

For example, after receiving the third identifier information, the second communication apparatus may map the data to a corresponding PDCP based on the correspondence between the third identifier information and the RLC bearer.

Alternatively, the third identifier information may also be sent by the relay communication apparatus to the second communication apparatus by using another message.

Optionally, S303: The first communication apparatus sends a third message to the second communication apparatus via the relay communication apparatus.

For example, the first communication apparatus includes the third message in an RRC message transmitted on the SL 1, and sends the RRC message to the relay communication apparatus. After receiving the third message, the relay communication apparatus includes the third message in an RRC message transmitted on the SL 2, and sends the RRC message to the second communication apparatus.

Optionally, the third message includes first configuration information, and the first configuration information includes PDCP configuration information and SDAP configuration information between the first communication apparatus and the second communication apparatus.

For example, when the first communication apparatus sends data to the second communication apparatus, the end-to-end quality of service requirement (for example, a fourth QoS parameter) requirement from the first communication apparatus to the second communication apparatus needs to be met. The first communication apparatus determines the PDCP configuration information and the SDAP configuration information between the first communication apparatus and the second communication apparatus based on the fourth QoS parameter information, and sends the PDCP configuration information and the SDAP configuration information to the second communication apparatus via the relay communication apparatus, so that the first communication apparatus and the second communication apparatus may establish a PDCP bearer and an SDAP bearer based on the PDCP configuration information and the SDAP configuration information.

Optionally, the third message further includes the third identifier information. The third identifier information identifies the bearer between the first communication apparatus and the second communication apparatus. There is a correspondence between the third identifier information and the first configuration information. For example, the third identifier information is a bearer number of a PDCP bearer and a bearer number of an SDAP bearer that need to be established for communication between the first communication apparatus and the second communication apparatus. For example, the second communication apparatus maps data to a corresponding PDCP by using the correspondence between the first configuration information and the bearer that needs to be established for transmission from the first communication apparatus to the second communication apparatus and that is identified by the third identifier information.

Alternatively, the third identifier information may be sent by the first communication apparatus to the second communication apparatus via the relay communication apparatus and another message.

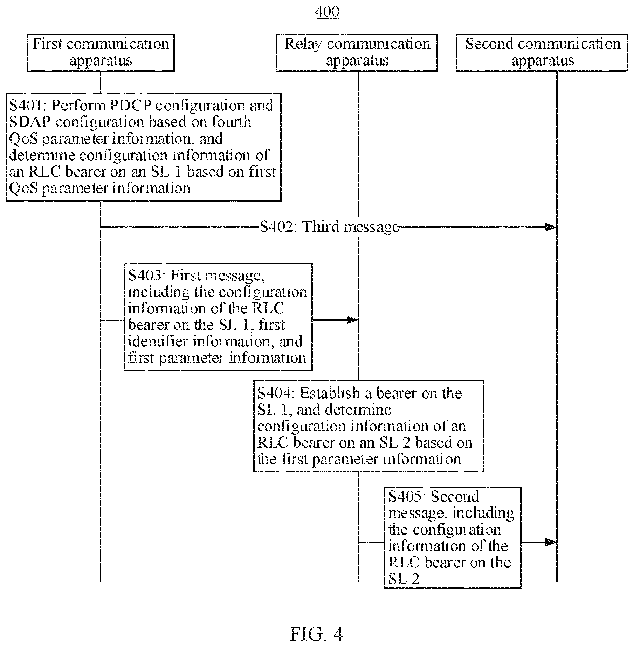

Refer to embodiments of this application corresponding to FIG. 1, FIG. 2, and FIG. 3. FIG. 4 is a schematic flowchart of a communication method 400 according to an embodiment of this application. The communication method shown in FIG. 4 relates to a first communication apparatus, a relay communication apparatus, and a second communication apparatus. The first communication apparatus, the relay communication apparatus, and the second communication apparatus may be the first communication apparatus, the relay communication apparatus, and the second communication apparatus in FIG. 1, FIG. 2 and FIG. 3 in this application. The method 400 includes but is not limited to the following steps.

S401: The first communication apparatus performs PDCP configuration and SDAP configuration based on fourth QoS parameter information, and determines configuration information of an RLC bearer on an SL 1 based on first QoS parameter information.

The fourth QoS parameter information may be QoS parameter information that needs to be met for end-to-end transmission between the first communication apparatus and the second communication apparatus when the first communication apparatus transmits data to the second communication apparatus via the relay communication apparatus. When the first communication apparatus sends data to the second communication apparatus via the relay communication apparatus, the first communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Alternatively, when the first communication apparatus sends data to the second communication apparatus via the relay communication apparatus, the relay communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Then, the relay communication apparatus may send the determined first QoS parameter information and/or second QoS parameter information to the first communication apparatus. The first QoS parameter information or the second QoS parameter information may separately include one or more types of parameters related to a performance requirement, such as a PC5 5G quality of service identifier (PC5 5G QoS Identifier, PQI), an allocation and retention priority (Allocation and Retention Priority, ARP), a guaranteed flow bit rate (Guaranteed Flow Bit Rate, GFBR), or the like. For example, the PQI is an ID of one QoS flow. One PQI identifies one QoS flow. The ARP contains a priority and/or a preemption capability of a QoS flow. The priority determines importance of a UE resource request. When system resources are limited, the ARP determines whether one QoS flow is accepted or rejected. The GFBR indicates a bit rate guaranteed by a network to be provided for the QoS flow in an average time window.

The first QoS parameter information and the second QoS parameter information may be determined on the first communication apparatus, may be determined on a first wireless network device connected to the first communication apparatus, or may be determined on the relay communication apparatus. For example, if the first QoS parameter information and the second QoS parameter information are determined on the first wireless network device of the first communication apparatus, the first communication apparatus includes the fourth QoS parameter information in an RRC message and sends the RRC message to the first wireless network device. The first wireless network device may separately determine, based on the fourth QoS parameter information and the preset algorithm (for example, based on the channel state information of the SL 1 and the SL 2), the first QoS parameter information that needs to be met when data transmission is performed on the SL 1 and the second QoS parameter information that needs to be met when data transmission is performed on the SL 2, and then send the obtained second QoS parameter information to the first communication apparatus by using the RRC message. Then the first communication apparatus sends the obtained second QoS parameter information to the relay communication apparatus. Alternatively, if the first QoS parameter information and the second QoS parameter information is determined on the first communication apparatus, the first communication apparatus may separately determine, based on the fourth QoS parameter information and the preset algorithm (for example, based on the channel state information of the SL 1 and the SL 2), the first QoS parameter information that needs to be met when data transmission is performed on the SL 1 and the second QoS parameter information that needs to be met when data transmission is performed on the SL 2, and then send the obtained second QoS parameter information to the relay communication apparatus. Alternatively, if the first QoS parameter information and the second QoS parameter information are determined on the relay communication apparatus, the first communication apparatus sends the fourth QoS parameter information to the relay communication apparatus by using an RRC message or a PC5-S message. After determining the first QoS parameter information and the second QoS parameter information, the relay communication apparatus sends the determined first QoS parameter information or the determined first QoS parameter information and second QoS parameter information to the first communication apparatus.

Optionally, configuration information of at least one RLC bearer on the SL 1 is used by the first communication apparatus and the relay communication apparatus to establish the at least one RLC bearer on the SL 1.

It should be understood that, to ensure communication, the sender and the receiver need to have consistent SLRB bearer configuration to control data sending or receiving, for example, the SLRB bearer configuration may include some or all of the following:
- SDAP configuration: Whether an SDAP header exists, whether the SLRB is default, a mapping relationship from a QoS flow to an SLRB, and a communication mode (unicast, multicast, or broadcast);
- PDCP configuration: duration of a PDCP discard timer, a length of a PDCP sequence number, and whether out-of-order transmission is performed;
- RLC configuration: an RLC transmission mode, a length of an RLC sequence number, and a maximum allowed quantity of times of ARQ retransmission in an RLC AM mode; and
- LCH configuration: parameters related to logical channel prioritization (LCP, Logical Channel Prioritization), such as a logical channel priority, a prioritized bit rate (Prioritized Bit Rate, PBR), and bucket size duration (Bucket Size Duration, BSD), an indication indicating whether to allow use of configured grant type 1, whether to enable a HARQ feedback, an SR resource associated with an LCH, and an LCG to which the LCH belongs.

When the first communication apparatus is in different connection states, methods for obtaining the configuration information of the at least one RLC bearer on the SL 1 are different.

In a possible implementation, when the first communication apparatus is in a connected state, the first communication apparatus may send the first QoS parameter information to a wireless network device based on a sidelink user equipment identifier (Sidelink UE identifier, SUI) message. The first QoS parameter information includes identifier information PFI of each QoS flow and a corresponding QoS parameter. The network device performs SLRB configuration for the first communication apparatus based on the first QoS parameter information reported by the first communication apparatus, and sends SLRB-related configuration information to the first communication apparatus by using the RRC message, to determine the configuration information of the at least one RLC bearer on the SL 1.

In another possible implementation, when the first communication apparatus is in an idle state or an inactive state, the first communication apparatus obtains SLRB-related configuration based on bearer configuration information in a system message broadcast by a wireless network device, to determine the configuration information of the at least one RLC bearer on the SL 1. For example, the first communication apparatus may obtain, based on the first QoS parameter information, corresponding SLRB-related configuration information from the bearer configuration information in the system message broadcast by the wireless network device.

In another possible implementation, when the first communication apparatus is in an out-of-coverage state, the first communication apparatus determines the configuration information of the at least one RLC bearer on the SL 1 based on preconfigured bearer configuration information. For example, the first communication apparatus may obtain, based on the first QoS parameter information, corresponding SLRB-related configuration information from prestored or pre-obtained bearer configuration information.

S402: The first communication apparatus sends a third message to the second communication apparatus via the relay communication apparatus.

For example, the first communication apparatus includes the third message in an RRC message transmitted on the SL 1, and sends the RRC message to the relay communication apparatus. After receiving the third message, the relay communication apparatus includes the third message in an RRC message transmitted on the SL 2, and sends the RRC message to the second communication apparatus.

Optionally, the third message may be an RRCReconfigurationSidelink message, another PC5 RRC message, or a PC5-Signaling (PC5-Signaling, PC5) message.

Optionally, the third message includes first configuration information. The first configuration information is PDCP configuration information and SDAP configuration information from the first communication apparatus to the second communication apparatus. The second communication apparatus may map received data to a corresponding PDCP entity based on the received first configuration information.

Optionally, the third message further includes third identifier information. The third identifier information is identifier information of a bearer from the first communication apparatus to the second communication apparatus, and there is a correspondence between the third identifier information and the first configuration information. The second communication apparatus may identify the corresponding PDCP entity based on the third identifier information. The third identifier information may be an information element SLRB-PC_5-ConfigIndex defined in a protocol or in another form. The second communication apparatus may map the received data to the corresponding PDCP entity based on the correspondence between the first configuration information and the bearer that needs to be established for transmission from the first communication apparatus to the second communication apparatus and that is identified by the received third identifier information.

S403: The first communication apparatus sends a first message to the relay communication apparatus.

Optionally, the first message may be an RRCReconfigurationSidelink message, another PC5 RRC message, or a PCS-S message.

Optionally, the first message further includes first identifier information, and the first identifier information identifies the second communication apparatus. For example, the first identifier information is a device identification number of the second communication apparatus. For example, when the first communication apparatus needs to communicate with the second communication apparatus via the relay communication apparatus, the relay communication apparatus does not know that current bearer configuration is used for communication with which communication apparatus. The first communication apparatus sends the first identifier information to the relay communication apparatus by using the first message. The first identifier information identifies that current RLC bearer configuration information is used for communication between the first communication apparatus and the second communication apparatus.

Optionally, the first message further includes the configuration information of the at least one RLC bearer on the SL1. The configuration information of the at least one RLC bearer on the SL 1 is used by the first communication apparatus and the relay communication apparatus to establish the at least one RLC bearer on the SL 1. It should be understood that, to implement communication, the sender and the receiver need to have consistent SLRB bearer configuration to control data sending or receiving. Therefore, the first communication apparatus needs to send the configuration information of the at least one RLC bearer on the SL 1 to the relay communication apparatus.

Optionally, the first message further includes first parameter information, and the first parameter information includes the second QoS parameter information. The second QoS parameter information includes QoS parameter requirement information that one or more RLC bearers on the first sidelink need to meet on the second sidelink. The relay communication apparatus determines third QoS parameter information on the SL 2 based on the received second QoS parameter information, and determines configuration information of one RLC bearer on the SL 2 based on the third QoS parameter information.

Optionally, the first parameter information further includes second identifier information. The second identifier information is used by the relay communication apparatus to determine a QoS parameter requirement that each RLC bearer on the SL 1 should meet on the SL 2. For example, the second identifier information is a PC5 quality of service flow identifier (PFI) corresponding to each RLC bearer on the SL 1. The relay communication apparatus determines a corresponding QoS flow based on the PFI that corresponds to each RLC bearer and that is sent by the first communication apparatus, and further determines, based on the QoS flow, the QoS parameter requirement that each RLC bearer on the SL 1 should meet on the SL 2.

Optionally, if 1: 1 mapping is performed between a bearer of the first communication apparatus and an RLC bearer on the SL 1, the first message further includes the third identifier information. The third identifier information identifies a correspondence between the bearer between the first communication apparatus and the second communication apparatus and the RLC bearer on the SL 1. The relay communication apparatus may include, based on the third identifier information, the identifier information of the bearer between the first communication apparatus and the second communication apparatus in a data packet transmitted on each RLC bearer on the SL1.

S404: The relay communication apparatus establishes a bearer on the SL 1, and determines the configuration information of the one RLC bearer on the SL 2 based on the first parameter information.

For example, the relay communication apparatus performs RLC bearer configuration on the SL 1 based on the configuration information that is of the at least one RLC bearer on the SL 1 and that is sent by the first communication apparatus, so that the first sidelink can be used for communication. The relay communication apparatus determines, based on the second identifier information that is associated with each RLC bearer and that is sent by the first communication apparatus (for example, QFI information of all QoS flows of each RLC bearer), a QoS flow corresponding to each QFI, and further determines, based on the determined QoS flow, a QoS parameter requirement that needs to be met when the QoS flow is transmitted on the SL 2. That is, an operation of determining the QoS parameter requirement that each RLC bearer on the SL 1 should meet on the SL 2 is completed.

Optionally, the second QoS parameter information received by the relay communication apparatus directly includes the QoS parameter requirement that the RLC bearer on the SL 1 should meet on the SL 2, and the relay communication apparatus does not need to determine, based on the received second identifier information, the QoS parameter requirement that needs to be met for data transmission on the SL 2. For example, the relay communication apparatus further performs N: 1 mapping based on the second identifier information or the second QoS parameter information. For example, the relay communication apparatus maps N RLC bearers on the SL 1 to one RLC bearer on the SL 2. After the mapping is completed, there are N RLC bearers on the SL 1 and one RLC bearer on the SL 2.

For example, the relay communication apparatus determines the third QoS parameter information on the SL 2. Because one or more bearers on the SL 1 finally converge into one bearer on the SL 2, all unconverged N bearers should be considered for a QoS parameter requirement of the one RLC bearer on the SL 2. For example, there are two bearers, SLRB 1 and SLRB 2, on the SL 1. A QoS flow 1 and a QoS flow 2 are transmitted on the SLRB 1, a QoS flow 3 and a QoS flow 4 are transmitted on the SLRB 2, and second identifier information corresponding to the four QoS flows is a PFI 1, a PFI 2, a PFI 3, and a PFI 4 respectively. The relay communication apparatus obtains, based on the second identifier information, four QoS parameter requirements corresponding to the SL 2. Due to N: 1 bearer convergence, the relay communication apparatus needs to consider the four QoS parameter requirements corresponding to the SL 2 to obtain the third QoS parameter information on the SL 2. The relay communication apparatus may determine the QoS parameter on the SL 2, namely, the third QoS parameter information, based on any one of the following methods, to ensure an E2E QoS parameter requirement as much as possible:
- a QoS parameter corresponding to a QoS flow having a highest priority in the N unconverged RLC bearers;
- a QoS parameter corresponding to a QoS flow having a lowest packet delay budget (Packet Delay Budget, PDB) in the N unconverged RLC bearers;
- a QoS parameter corresponding to a QoS flow having a requirement for a highest guaranteed flow bit rate (Guaranteed Flow Bit Rate, GFBR) in the N unconverged RLC bearers;
- a QoS parameter corresponding to a QoS flow having a requirement for a lowest packet error rate (Packet Error Rate, PER) in the N unconverged RLC bearers;
- a QoS parameter having a highest requirement on each item with reference to a plurality of sets of QoS parameter information of the N unconverged RLC bearers; and
- an average value obtained based on the plurality of sets of QoS parameter information of the unconverged N RLC bearers.

After determining the third QoS parameter information on the SL 2, the relay communication apparatus may determine the configuration information of the one RLC bearer on the SL 2 based on the third QoS parameter information. Optionally, the configuration information of the one RLC bearer on the SL 2 is used by the second communication apparatus and the relay communication apparatus to establish the one RLC bearer on the SL 2. A specific configuration method for determining the RLC bearer configuration based on the third QoS parameter information is determined based on a state of the relay communication apparatus. For detailed descriptions, refer to step S301. Details are not described herein again.

S405: The relay communication apparatus sends a second message to the second communication apparatus.

Optionally, the second message includes the configuration information of the one RLC bearer on the SL 2. The second communication apparatus performs RLC bearer configuration on the SL 2 based on the received configuration information of the one RLC bearer on the SL 2.

Optionally, a first communication apparatus includes the third identifier information, namely, the identifier information of the bearer between the first communication apparatus and the second communication apparatus, in an adaptation header of each data packet, and then forwards the data packet to the second communication apparatus via the relay communication apparatus. After receiving the data packet, the second communication apparatus may map the data packet to a corresponding PDCP entity based on the third identifier information carried in the data packet. Finally, the second communication apparatus correctly delivers the data to an SDAP entity based on the first configuration information, to complete data transmission from the first communication apparatus to the second communication apparatus. According to the communication method 400 in this embodiment of this application, an adaptation layer needs to be provided in each of the first communication apparatus, the relay communication apparatus, and the second communication apparatus. The adaptation layer is used to add and identify the adaptation header of the data packet. If the first message further includes the third identifier information, the first communication apparatus does not include the third identifier information in the adaptation header of the data packet. Instead, the relay communication apparatus includes the third identifier information in the adaptation header of each data packet when forwarding the data packet to the second communication apparatus. After receiving the data packet, the second communication apparatus may map the data packet to a corresponding PDCP entity based on the third identifier information carried in the data packet. Finally, the second communication apparatus correctly delivers the data to the SDAP entity based on the first configuration information, to complete communication from the first communication apparatus to the second communication apparatus. According to the communication method 400 in this embodiment of this application, because adaptation header addition and identification of a data packet only need to be performed on the relay communication apparatus and the second communication apparatus, the adaptation layer only needs to exist between the relay communication apparatus and the second communication apparatus, and no adaptation layer needs to exist between the relay communication apparatus and the first communication apparatus.

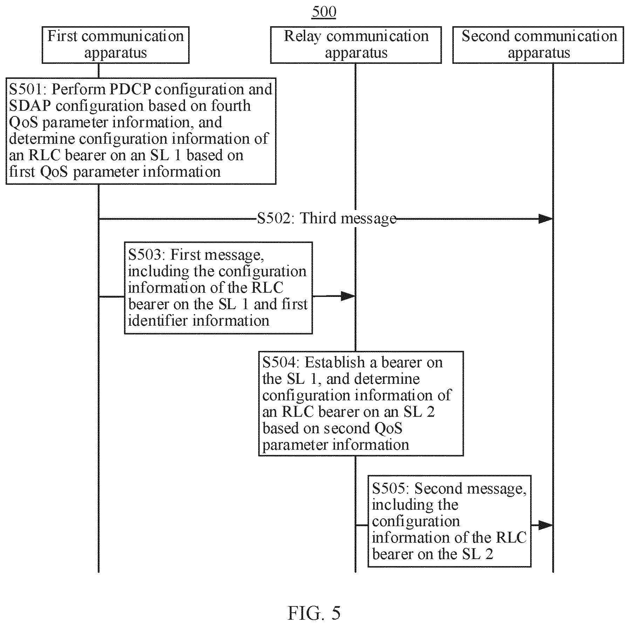

Refer to embodiments of this application corresponding to FIG. 1, FIG. 2, and FIG. 3. FIG. 5 is a schematic flowchart of a communication method 500 according to an embodiment of this application. The communication method shown in FIG. 5 relates to a first communication apparatus, a relay communication apparatus, and a second communication apparatus. The first communication apparatus, the relay communication apparatus, and the second communication apparatus may be the first communication apparatus, the relay communication apparatus, and the second communication apparatus in FIG. 1, FIG. 2 and FIG. 3 in this application. The method 500 includes but is not limited to the following steps.

S501: The first communication apparatus performs PDCP configuration and SDAP configuration based on fourth QoS parameter information, and determines configuration information of an RLC bearer on an SL 1 based on first QoS parameter information.

The fourth QoS parameter information may be QoS parameter information that needs to be met for end-to-end transmission between the first communication apparatus and the second communication apparatus when the first communication apparatus sends data to the second communication apparatus via the relay communication apparatus. When the first communication apparatus sends data to the second communication apparatus via the relay communication apparatus, the first communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Alternatively, when the first communication apparatus sends data to the second communication apparatus via the relay communication apparatus, the relay communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Then, the relay communication apparatus may send the determined first QoS parameter information and/or second QoS parameter information to the first communication apparatus. The first QoS parameter information or the second QoS parameter information may separately include one or more types of parameters related to a performance requirement, such as a PC5 5G quality of service identifier (PC5 5G QoS Identifier, PQI), an allocation and retention priority (Allocation and Retention Priority, ARP), a guaranteed bit rate (Guarantee Bit Rate, GFBR), or the like. For example, the PQI is an ID of one QoS flow. One PQI identifies one QoS flow. The ARP contains a priority and/or a preemption capability of a QoS flow. The priority determines importance of a UE resource request. When system resources are limited, the ARP determines whether one QoS flow is accepted or rejected. The GFBR indicates a bit rate guaranteed by a network to be provided for the QoS flow in an average time window.

Optionally, the first QoS parameter information and the second QoS parameter information may be determined on the first communication apparatus, may be determined on a first wireless network device connected to the first communication apparatus, or may be determined on the relay communication apparatus. For a specific determining method, refer to the descriptions in step S401. Details are not described herein again.

Optionally, configuration information of at least one RLC bearer on the SL 1 is used by the first communication apparatus and the relay communication apparatus to establish one or more RLC bearers on the SL 1.

It should be understood that, to ensure communication, a sender and a receiver need to have consistent SLRB bearer configuration to control data sending or receiving. For detailed descriptions of the SLRB bearer configuration, refer to S401. Details are not described herein again.

When the first communication apparatus is in different connection states, methods for obtaining the configuration information of the at least one RLC bearer on the SL 1 are different. For detailed descriptions of the obtaining method, refer to S401. Details are not described herein again.

S502: The first communication apparatus sends a third message to the second communication apparatus via the relay communication apparatus.

Optionally, the third message may be an RRCReconfigurationSidelink message, another dedicated RRC message, or a PC5-S message.

Optionally, the third message further includes first configuration information. The first configuration information is PDCP bearer configuration information and SDAP bearer configuration information from the first communication apparatus to the second communication apparatus. The second communication apparatus may map received data to a corresponding PDCP entity based on the received first configuration information.

Optionally, the third message includes third identifier information. The third identifier information is identifier information of a bearer from the first communication apparatus to the second communication apparatus, and there is a correspondence between the third identifier information and the first configuration information. In addition, there is a correspondence between the third identifier information and an RLC bearer on the SL 1. The second communication apparatus may identify the corresponding PDCP entity based on the third identifier information. The third identifier information may be an information element SLRB-PCS-ConfigIndex defined in a protocol or in another form. The second communication apparatus may map the received data to the corresponding PDCP entity based on the correspondence between the first configuration information and the bearer that needs to be established for transmission from the first communication apparatus to the second communication apparatus and that is identified by the received third identifier information.

S503: The first communication apparatus sends a first message to the second communication apparatus.

Optionally, the first message may be an RRCReconfigurationSidelink message, another dedicated RRC message, or a PC5-S message.

Optionally, the first message further includes first identifier information, and the first identifier information identifies the second communication apparatus. For example, the first identifier information is a device identification number of the second communication apparatus. For example, when the first communication apparatus needs to communicate with the second communication apparatus via the relay communication apparatus, the relay communication apparatus does not know that current bearer configuration is used for communication with which communication apparatus. The first communication apparatus sends the first identifier information to the relay communication apparatus by using the first message. The first identifier information identifies that current RLC bearer configuration information is used for communication between the first communication apparatus and the second communication apparatus.

Optionally, the first message further includes the configuration information of the at least one RLC bearer on the SL 1. The configuration information of the at least one RLC bearer on the SL 1 is used by the first communication apparatus and the relay communication apparatus to establish the one or more RLC bearers on the SL 1. It should be understood that, to ensure communication, the sender and the receiver need to have consistent SLRB bearer configuration to control data sending or receiving. Therefore, the first communication apparatus needs to send the configuration information of the at least one RLC bearer on the SL 1 to the relay communication apparatus.

Optionally, if 1:1 mapping is performed between a bearer of the first communication apparatus and an RLC bearer on the SL 1, the first message further includes the third identifier information. The third identifier information identifies a correspondence between the bearer between the first communication apparatus and the second communication apparatus and the RLC bearer on the SL 1. The relay communication apparatus may include, based on the third identifier information, the identifier information of the bearer between the first communication apparatus and the second communication apparatus in a data packet transmitted on each RLC bearer on the SL1.

S504: The relay communication apparatus establishes a bearer on the SL 1, and determines configuration information of an RLC bearer on the SL 2 based on the second QoS parameter information.

For example, after receiving the configuration information that is of the at least one RLC bearer on the SL 1 and that is sent by the first communication apparatus, the relay communication apparatus may establish the bearer on the SL 1 based on the configuration information of the at least one RLC bearer on the SL 1. The relay communication apparatus determines configuration information of at least one RLC bearer on the SL 2 based on the second QoS parameter information, and establishes a bearer on the SL 2 based on the configuration information of the at least one RLC bearer on the SL 2. The second QoS parameter information is determined based on a quality of service requirement that is determined by using a preset algorithm based on the fourth QoS parameter information (for example, based on the channel state information of the SL 1 and the SL 2) and that needs to be met for data transmission on the SL 2, to meet a quality of service requirement of end-to-end transmission when data is transmitted from the first communication apparatus to the second communication apparatus. A specific configuration method for determining the configuration information of the at least one RLC bearer on the SL 2 based on the second QoS parameter information is determined based on a state of the relay communication apparatus. For detailed descriptions, refer to step S401.

Optionally, the configuration information of the at least one RLC bearer on the SL 2 is used by the second communication apparatus and the relay communication apparatus to establish the at least one RLC bearer on the SL 2.

S505: The relay communication apparatus sends a second message to the second communication apparatus.

Optionally, the second message includes the configuration information of the at least one RLC bearer on the SL 2. The second communication apparatus performs RLC bearer configuration on the SL 2 based on the received configuration information of the at least one RLC bearer on the SL 2.

Optionally, the relay communication system may be based on the foregoing bearer configuration. The first communication apparatus includes second identifier information and the third identifier information in the adaptation header of each data packet, and sends the data packet to the relay communication system. After receiving the data packet, the relay communication apparatus may map the data packet to a corresponding bearer on the SL 2 based on the second identifier information (for example, PFI) carried in each data packet. The relay communication apparatus may further remove the second identifier information from the data packet. In this way, the data packet carries only the third identifier information, and then the relay communication apparatus sends the data packet to the second communication apparatus. After receiving the data packet, the second communication apparatus may map the data packet to a corresponding PDCP entity based on the third identifier information carried in the data packet. Finally, the second communication apparatus delivers data to a corresponding SDAP entity based on the first configuration information, to complete data transmission from the first communication apparatus to the second communication apparatus. According to the communication method 500 in this embodiment of this application, the first communication apparatus may communicate with the second communication apparatus via the relay communication apparatus.

Optionally, if the first message further includes the third identifier information, the first communication apparatus does not include the third identifier information in the adaptation header of the data packet. Instead, the relay communication apparatus includes the third identifier information in the adaptation header of each data packet when forwarding the data packet to the second communication apparatus. After receiving the data packet, the second communication apparatus may map the data packet to a corresponding PDCP entity based on the third identifier information carried in the data packet. Finally, the second communication apparatus delivers the data to the corresponding SDAP entity based on the first configuration information, to complete communication from the first communication apparatus to the second communication apparatus. According to the communication method 500 in this embodiment of this application, an adaptation layer needs to be provided in each of the first communication apparatus, the relay communication apparatus, and the second communication apparatus. The adaptation layer is used to add and identify the adaptation header of the data packet.

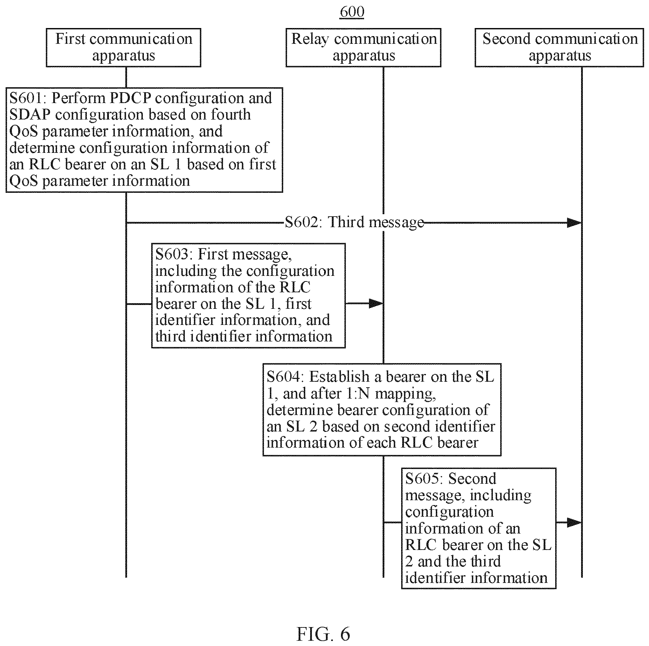

Refer to embodiments of this application corresponding to FIG. 1, FIG. 2, and FIG. 3. FIG. 6 is a schematic flowchart of a communication method 600 according to an embodiment of this application. The communication method shown in FIG. 6 relates to a first communication apparatus, a relay communication apparatus, and a second communication apparatus. The first communication apparatus, the relay communication apparatus, and the second communication apparatus may be the first communication apparatus, the relay communication apparatus, and the second communication apparatus in FIG. 1, FIG. 2 and FIG. 3 in this application. The method 600 includes but is not limited to the following steps.

S601: The first communication apparatus performs PDCP configuration and SDAP configuration based on fourth QoS parameter information, and determines configuration information of one RLC bearer on an SL 1 based on first QoS parameter information.

The fourth QoS parameter information may be QoS parameter information that needs to be met for end-to-end transmission between the first communication apparatus and the second communication apparatus when the first communication apparatus sends data to the second communication apparatus via the relay communication apparatus. When the first communication apparatus sends data to the second communication apparatus via the relay communication apparatus, the first communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Alternatively, when the first communication apparatus sends data to the second communication apparatus via the relay communication apparatus, the relay communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Then, the relay communication apparatus may send the determined first QoS parameter information and/or second QoS parameter information to the first communication apparatus. The first QoS parameter information or the second QoS parameter information may separately include one or more types of parameters related to a performance requirement, such as a PC5 5G quality of service identifier (PC5 5G QoS Identifier, PQI), an allocation and retention priority (Allocation and Retention Priority, ARP), or a guaranteed bit rate (Guarantee Bit Rate, GFBR). For example, the PQI is an ID of one QoS flow. One PQI identifies one QoS flow. The ARP contains a priority and/or a preemption capability of a QoS flow. The priority determines importance of a UE resource request. When system resources are limited, the ARP determines whether one QoS flow is accepted or rejected. The GFBR indicates a bit rate guaranteed by a network to be provided for the QoS flow in an average time window.

Optionally, the first QoS parameter information and the second QoS parameter information may be determined on the first communication apparatus, may be determined on a first wireless network device connected to the first communication apparatus, or may be determined on the relay communication apparatus. For a specific determining method, refer to the descriptions in step S401. Details are not described herein again.

Optionally, the configuration information of the one RLC bearer on the SL 1 is used by the first communication apparatus and the relay communication apparatus to establish the one RLC bearer on the SL 1.

It should be understood that, to ensure communication, a sender and a receiver need to have consistent SLRB bearer configuration to control data sending or receiving. For detailed descriptions of the SLRB bearer configuration, refer to S401. Details are not described herein again.

When the first communication apparatus is in different connection states, methods for obtaining the configuration information of the one RLC bearer on the SL 1 are different. For detailed descriptions of the obtaining method, refer to S401. Details are not described herein again.

S602: The first communication apparatus sends a third message to the second communication apparatus via the relay communication apparatus.

Optionally, the third message may be an RRCReconfigurationSidelink message, another PC5 RRC message, or a PC5 signaling (PC5-Signaling, PC5) message.

Optionally, the third message further includes first configuration information. The first configuration information is PDCP bearer configuration information and SDAP bearer configuration information from the first communication apparatus to the second communication apparatus. The second communication apparatus may map received data to a corresponding PDCP entity based on the received first configuration information.

Optionally, the third message includes third identifier information. The third identifier information is identifier information of a bearer from the first communication apparatus to the second communication apparatus, and the third identifier information is in a one-to-one correspondence with the first configuration information. In addition, the third identifier information is in a one-to-one correspondence with RLC bearer on the SL 1. The second communication apparatus may identify the corresponding PDCP entity based on the third identifier information. The third identifier information may be an information element SLRB-PC5-ConfigIndex defined in a protocol or in another form. The second communication apparatus may map the received data to the corresponding PDCP entity based on the correspondence between the first configuration information and the bearer that needs to be established for transmission from the first communication apparatus to the second communication apparatus and that is identified by the received third identifier information.

S603: The first communication apparatus sends a first message to the second communication apparatus.

Optionally, the first message may be an RRCReconfigurationSidelink message, another PC5 RRC message, or a PC5-S message.

Optionally, the first message further includes first identifier information, and the first identifier information identifies the second communication apparatus. For example, the first identifier information is a device identification number of the second communication apparatus. For example, when the first communication apparatus needs to communicate with the second communication apparatus via the relay communication apparatus, the relay communication apparatus does not know that current bearer configuration is used for communication with which communication apparatus. The first communication apparatus sends the first identifier information to the relay communication apparatus by using the first message. The first identifier information identifies that current RLC bearer configuration information is used for communication between the first communication apparatus and the second communication apparatus.

Optionally, the first message further includes the configuration information of the one RLC bearer on the SL 1. The configuration information of the one RLC bearer on the SL 1 is used by the first communication apparatus and the relay communication apparatus to establish the one RLC bearer on the SL 1. It should be understood that, to ensure communication, the sender and the receiver need to have consistent SLRB bearer configuration to control data sending or receiving. Therefore, the first communication apparatus needs to send the configuration information of the one RLC bearer on the SL 1 to the relay communication apparatus.

Optionally, the first message further includes the third identifier information. The third identifier information is identifier information of the bearer from the first communication apparatus to the second communication apparatus. The relay communication apparatus may include the third identifier information in a data packet, and send the data packet to the second communication apparatus. The second communication apparatus may map the data packet to a corresponding PDCP entity based on the third identifier information in the data.

S604: The relay communication apparatus establishes a bearer on the SL 1, and after 1:N mapping, determines bearer configuration of the SL 2 based on second identifier information in each RLC bearer.

For example, after receiving the configuration information that is of the one RLC bearer on the SL 1 and that is sent by the first communication apparatus, the relay communication apparatus establishes the bearer on the SL 1 based on the configuration information of the one RLC bearer on the SL 1. The relay communication apparatus maps one RLC bearer on the SL 1 to N RLC bearers on the SL 2, and determines second QoS parameter information on the SL 2 based on second identifier information (for example, PFI information) included in the N RLC bearers on the SL 2. For example, a QoS flow 1 and a QoS flow 2 are transmitted on an RLC bearer SLRB 1 on the SL 1, and the RLC bearer SLRB 1 includes second identifier information. The second identifier information may be a PFI 1 and a PFI 2, and the PFI 1 and the PFI 2 are identifiers of the QoS flow 1 and the QoS flow 2 respectively. The relay communication apparatus maps the bearer SLRB 1 on the SL 1 to the SLRB 2 and the SLRB 3 on the SL 2 based on the PFI 1 and the PFI 2. The QoS flow 1 is transmitted on the SLRB 2, and the QoS flow 2 is transmitted on the SLRB 3. The relay communication apparatus determines second QoS parameter information on the SL 2 based on the PFI 1 and the PFI 2, and determines configuration information of at least one RLC bearer on the SL 2 based on the second QoS parameter information. A specific configuration method for determining the configuration information of the at least one RLC bearer on the SL 2 based on the second QoS parameter information is determined based on a state of the relay communication apparatus. For detailed descriptions, refer to step S401.

Optionally, the configuration information of the at least one RLC bearer on the SL 2 is used by the second communication apparatus and the relay communication apparatus to establish the at least one RLC bearer on the SL 2.

S605: The relay communication apparatus sends a second message to the second communication apparatus.

Optionally, the second message includes the configuration information of the at least one RLC bearer on the SL 2. For example, the second communication apparatus performs RLC bearer configuration on the SL 2 based on the received configuration information of the at least one RLC bearer on the SL 2.

Optionally, the second message further includes the third identifier information. The third identifier information is in a one-to-one correspondence with an RLC bearer on the SL 2. The second communication apparatus delivers data on different RLC bearers on the SL 2 to a corresponding PDCP entity based on the third identifier information.

Optionally, the relay communication system may be based on the bearer configuration. The first communication apparatus includes the second identifier information in the adaptation header of each data packet, and sends the data packet to the relay communication apparatus. After receiving the data packet, the relay communication apparatus may map the data packet to a corresponding bearer on the SL 2 based on the second identifier information carried in each data packet. After completing bearer mapping on the SL 2, the relay communication apparatus may remove the second identifier information from the data packet, and forward the data packet to the second communication apparatus. After receiving the data packet, the second communication apparatus may map the data packet to a corresponding PDCP entity based on the third identifier information carried in the second message. Finally, the second communication apparatus delivers the data to the corresponding SDAP entity based on the first configuration information, to complete communication from the first communication apparatus to the second communication apparatus. According to the communication method 600 in this embodiment of this application, because one bearer on the SL 1 is mapped to N bearers on the SL 2, no adaptation header addition and identification of a data packet needs to be performed on the relay communication apparatus and the second communication apparatus, no adaptation layer needs to exist between the relay communication apparatus and the second communication apparatus, and no third identifier information needs to be carried in the adaptation header of the data packet.

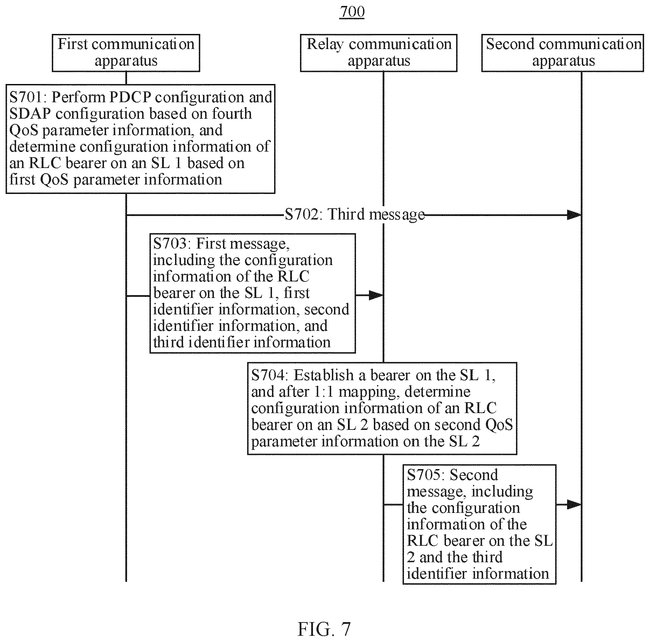

Based on FIG. 1, FIG. 2, and FIG. 3, FIG. 7 is a schematic flowchart of a communication method 700 according to an embodiment of this application. The communication method shown in FIG. 7 relates to a first communication apparatus, a relay communication apparatus, and a second communication apparatus. The first communication apparatus, the relay communication apparatus, and the second communication apparatus may be the first communication apparatus, the relay communication apparatus, and the second communication apparatus in FIG. 1, FIG. 2 and FIG. 3 in this application. The method 700 includes but is not limited to the following steps.

S701: The first communication apparatus performs PDCP configuration and SDAP configuration based on fourth QoS parameter information, and determines configuration information of one RLC bearer on an SL 1 based on first QoS parameter information.

The fourth QoS parameter information may be QoS parameter information that needs to be met for end-to-end transmission between the first communication apparatus and the second communication apparatus when the first communication apparatus sends data to the second communication apparatus via the relay communication apparatus. When the first communication apparatus sends data to the second communication apparatus via the relay communication apparatus, the first communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Alternatively, when the first communication apparatus sends data to the second communication apparatus via the relay communication apparatus, the relay communication apparatus may separately determine, based on the fourth QoS parameter information and a preset algorithm (for example, based on channel state information of the SL 1 and an SL 2), the first QoS parameter information that needs to be met when data transmission is performed on the SL 1 and second QoS parameter information that needs to be met when data transmission is performed on the SL 2. Then, the relay communication apparatus may send the determined first QoS parameter information and/or second QoS parameter information to the first communication apparatus. The first QoS parameter information or the second QoS parameter information may separately include one or more types of parameters related to a performance requirement, such as a PC5 5G quality of service identifier (PC5 5G QoS Identifier, PQI), an allocation and retention priority (Allocation and Retention Priority, ARP), a guaranteed bit rate (Guarantee Bit Rate, GFBR) or the like. For example, the PQI is an ID of one QoS flow. One PQI identifies one QoS flow. The ARP contains a priority and/or a preemption capability of a QoS flow. The priority determines importance of a UE resource request. When system resources are limited, the ARP determines whether one QoS flow is accepted or rejected. The GFBR indicates a bit rate guaranteed by a network to be provided for the QoS flow in an average time window.

Optionally, the first QoS parameter information and the second QoS parameter information may be determined on the first communication apparatus, may be determined on a first wireless network device connected to the first communication apparatus, or may be determined on the relay communication apparatus. For a specific determining method, refer to the descriptions in step S401. Details are not described herein again.

Optionally, the configuration information of the one RLC bearer on the SL 1 is used by the first communication apparatus and the relay communication apparatus to establish the one RLC bearer on the SL 1.

It should be understood that, to ensure communication, a sender and a receiver need to have consistent SLRB bearer configuration to control data sending or receiving. For detailed descriptions of the SLRB bearer configuration, refer to S401. Details are not described herein again.

When the first communication apparatus is in different connection states, methods for obtaining the configuration information of the one RLC bearer on the SL 1 are different. For detailed descriptions of the obtaining method, refer to S401. Details are not described herein again.

S702: The first communication apparatus sends a third message to the second communication apparatus via the relay communication apparatus.

Optionally, the third message may be an RRCReconfigurationSidelink message, another PC5 RRC message, or a PC5 signaling (PC5-Signaling, PC5) message.

Optionally, the third message further includes first configuration information. The first configuration information is PDCP bearer configuration information and SDAP bearer configuration information from the first communication apparatus to the second communication apparatus. The second communication apparatus may map received data to a corresponding PDCP entity based on the received first configuration information.

Optionally, the third message includes third identifier information. The third identifier information is identifier information of a bearer from the first communication apparatus to the second communication apparatus, and the third identifier information is in a one-to-one correspondence with the first configuration information. In addition, the third identifier information is in a one-to-one correspondence with RLC bearer on the SL 1. The second communication apparatus may identify the corresponding PDCP entity based on the third identifier information. The third identifier information may be an information element SLRB-PC5-ConfigIndex defined in a protocol or in another form. The second communication apparatus may map the received data to the corresponding PDCP entity based on the correspondence between the first configuration information and the bearer that needs to be established for transmission from the first communication apparatus to the second communication apparatus and that is identified by the received third identifier information.

S703: The first communication apparatus sends a first message to the second communication apparatus.

Optionally, the first message may be an RRCReconfigurationSidelink message, another PC5 RRC message, or a PC5-S message.

Optionally, the first message further includes first identifier information, and the first identifier information identifies the second communication apparatus. For example, the first identifier information is a device identification number of the second communication apparatus. For example, when the first communication apparatus needs to communicate with the second communication apparatus via the relay communication apparatus, the relay communication apparatus does not know that current bearer configuration is used for communication with which communication apparatus. The first communication apparatus sends the first identifier information to the relay communication apparatus by using the first message. The first identifier information identifies that current RLC bearer configuration information is used for communication between the first communication apparatus and the second communication apparatus.

Optionally, the first message further includes the configuration information of the one RLC bearer on the SL 1. The configuration information of the one RLC bearer on the SL 1 is used by the first communication apparatus and the relay communication apparatus to establish the one RLC bearer on the SL 1. It should be understood that, to ensure communication, the sender and the receiver need to have consistent SLRB bearer configuration to control data sending or receiving. Therefore, the first communication apparatus needs to send the configuration information of the one RLC bearer on the SL 1 to the relay communication apparatus.

Optionally, the first parameter information further includes second identifier information. The second identifier information is a PC5 quality of service flow identifier (PFI) corresponding to the one RLC bearer on the SL 1. The relay communication apparatus determines a corresponding QoS flow based on the PFI that corresponds to one RLC bearer and that is sent by the first communication apparatus, and further determines, based on the QoS flow, a QoS parameter requirement that the one RLC bearer on the SL 1 should meet on the SL 2.

Optionally, the first message further includes the third identifier information. The third identifier information is identifier information of the bearer from the first communication apparatus to the second communication apparatus. The second communication apparatus may map received data to a corresponding PDCP entity based on a correspondence between the first configuration information and a bearer that needs to be established for transmission from the first communication apparatus to the second communication apparatus and that is identified by the received third identifier information.

S704: The relay communication apparatus establishes a bearer on the SL 1, and after 1: 1 mapping, determines configuration information of one RLC bearer on the SL 2 based on second QoS parameter information on the SL 2.

For example, after receiving the configuration information that is of the one RLC bearer on the SL 1 and that is sent by the first communication apparatus, the relay communication apparatus establishes the bearer on the SL 1 based on the configuration information of the one RLC bearer on the SL 1. The relay communication apparatus maps one bearer on the SL 1 to one bearer on the SL 2 in a one-to-one manner. The relay communication apparatus determines the second QoS parameter information on the SL 2 based on second identifier information corresponding to the one RLC bearer on the SL 1, and determines second parameter information on the SL 2 based on the second QoS parameter information. For example, a QoS flow 1 and a QoS flow 2 are transmitted on a bearer SLRB 1 on the SL1, and PC5 quality of service flow identifiers corresponding to the QoS flow 1 and the QoS flow 2 are respectively a PFI 1 and a PFI 2. The relay communication apparatus maps the bearer SLRB 1 on the SL 1 to the SLRB 2 on the SL 2 in a one-to-one manner. The QoS flow 1 and the QoS flow 2 are transmitted on the SLRB 2. If the first parameter information includes the second identifier information, the relay communication apparatus determines the second QoS parameter information on the SL 2 based on the PFI 1 and the PFI 2 of the QoS flow 1 and the QoS flow 2 in the second identifier information, and determines the configuration information of the one RLC bearer on the SL 2 based on the second QoS parameter information. If the first parameter information includes a QoS parameter requirement corresponding to an RLC bearer, in this way, the configuration information of the one RLC bearer on the SL 2 is directly determined based on QoS parameter information in the first parameter information. A specific configuration method for determining the configuration information of the one RLC bearer on the SL 2 based on the second QoS parameter information is determined based on a state of the relay communication apparatus. For detailed descriptions, refer to step S401.

Optionally, the configuration information of the one RLC bearer on the SL 2 is used by the second communication apparatus and the relay communication apparatus to establish the one RLC bearer on the SL 2.

S705: The relay communication apparatus sends a second message to the second communication apparatus.

Optionally, the second message includes the configuration information of the one RLC bearer on the SL 2. The second communication apparatus performs RLC bearer configuration on the SL 2 based on the received configuration information of the one RLC bearer on the SL 2.

Optionally, the second message further includes the third identifier information. The third identifier information is in a one-to-one correspondence with an RLC bearer on the SL 2. The second communication apparatus delivers a received data packet to a corresponding PDCP entity based on the third identifier information.

The relay communication system maybe based on the bearer configuration. The first communication apparatus sends the data packet to the second communication apparatus via the relay communication apparatus. After receiving the data packet, the second communication apparatus may map the data packet to a corresponding PDCP entity based on the third identifier information corresponding to the one bearer on the SL 2. Finally, the second communication apparatus delivers the data to the corresponding SDAP entity based on the first configuration information, to complete communication from the first communication apparatus to the second communication apparatus. In the communication method 700 in this embodiment of this application, because one bearer on the SL 1 is mapped to one bearer on the SL 2, no adaptation layer needs to exist between the first communication apparatus and the relay communication apparatus or between the relay communication apparatus and the second communication apparatus, and no additional identifier information, such as the third identifier information and the second identifier information, needs to be carried in the data packet. According to the communication method 700 in this embodiment of this application, the first communication apparatus may communicate with the second communication apparatus via the relay communication apparatus.

It may be understood that, to implement functions in the foregoing embodiments, the first communication apparatus, the relay communication apparatus, and the second communication apparatus include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraint conditions of the technical solutions.

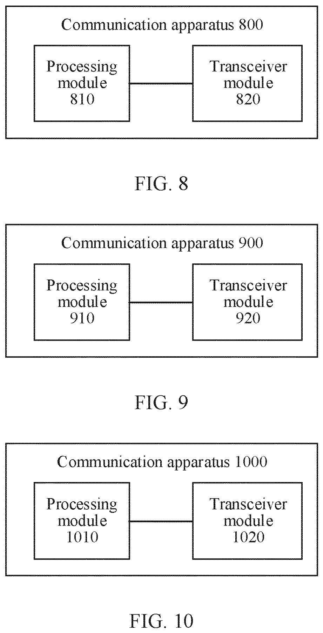

FIG. 8, FIG. 9, and FIG. 10 are schematic block diagrams of a possible communication apparatus according to an embodiment of this application. These communication apparatuses may be configured to separately implement functions of the first communication apparatus, the relay communication apparatus, and the second communication apparatus in the foregoing method embodiments, and therefore can also achieve beneficial effects of the foregoing method embodiments. In this embodiment of this application, the communication apparatus may be the first communication apparatus, the relay communication apparatus, and the second communication apparatus in the foregoing method embodiments, or may be a module used in the first communication apparatus, the relay communication apparatus, and the second communication apparatus.

As shown in FIG. 8, a communication apparatus 800 includes a processing module 810 and a transceiver module 820. The communication apparatus 800 is configured to implement a function of the first communication apparatus in the embodiment corresponding to FIG. 3, FIG. 4, FIG. 5, FIG. 6, or FIG. 7.

When the communication apparatus 800 is configured to implement the function of the first communication apparatus in the method embodiment shown in FIG. 3, FIG. 4, FIG. 5, FIG. 6, or FIG. 7, for example, the processing module 810 is configured to configure a PDCP and an SDAP based on fourth QoS parameter information.

Optionally, the processing module 810 is further configured to determine configuration information of at least one RLC bearer on an SL 1 based on first QoS parameter information.

Optionally, the processing module 810 is further configured to establish a bearer on the SL 1 based on the configuration information of the at least one RLC bearer on the SL 1.

Optionally, the processing module 810 is further configured to carry third identifier information and/or second identifier information in a first data unit.

The transceiver module 820 is further configured to send a third message to a second communication apparatus. Optionally, the third message may be an RRCReconfigurationSidelink message.

Optionally, the third message further includes first configuration information, and the first configuration information is PDCP bearer configuration information and SDAP bearer configuration information from the first communication apparatus to the second communication apparatus.

Optionally, the third message includes third identifier information. The third identifier information is identifier information of a bearer from the first communication apparatus to the second communication apparatus, and the third identifier information is in a one-to-one correspondence with the first configuration information. In addition, the third identifier information is in a one-to-one correspondence with RLC bearer on the SL 1.

Optionally, the transceiver module 820 is further configured to send a first message to a relay communication module. The first message may be an RRCReconfigurationSidelink message.

Optionally, the first message includes first identifier information, and the first identifier information identifies the second communication apparatus.

Optionally, the first message further includes the configuration information of the at least one RLC bearer on the SL 1. The configuration information of the at least one RLC bearer on the SL 1 is used by the first communication apparatus and the relay communication apparatus to establish one or more RLC bearers on the SL 1.

Optionally, the first message further includes the third identifier information. The third identifier information is the identifier information of the bearer from the first communication apparatus to the second communication apparatus.

Optionally, the first message further includes the second identifier information. The second identifier information includes a PC5 quality of service flow identifier (PFI).

The transceiver module 820 is further configured to send the first data unit to the relay communication module.

The foregoing is merely a partial example when the communication apparatus 800 is configured to implement the function of the first communication apparatus in the method embodiment shown in FIG. 3, FIG. 4, FIG. 5, FIG. 6, or FIG. 7. For functions of the processing module 810 and the transceiver module 820 in the communication apparatus 800, refer to the operations of the first communication apparatus in the method embodiment shown in FIG. 3, FIG. 4, FIG. 5, FIG. 6, or FIG. 7.

As shown in FIG. 9, a communication apparatus 900 includes a processing module 910 and a transceiver module 920. The communication apparatus 900 is configured to implement a function of the relay communication apparatus in the embodiment corresponding to FIG. 3, FIG. 4, FIG. 5, FIG. 6, or FIG. 7.

When the communication apparatus 900 is configured to implement the function of the relay communication apparatus in the method embodiment shown in FIG. 3, FIG. 4, FIG. 5, FIG. 6, or FIG. 7, for example, the processing module 910 is configured to establish a bearer on an SL 1 based on configuration information of at least one RLC bearer on the SL 1.

Optionally, the processing module 910 is further configured to consider QoS parameter statuses of all bearers on the SL 1 when the bearers are on an SL 2 after N:1 bearer mapping, to determine configuration information of one RLC bearer on the SL 2.

Optionally, the processing module 910 is further configured to determine configuration information of at least one RLC bearer on the SL 2 based on second QoS parameter information.

Optionally, the processing module 910 is further configured to determine the configuration information of the at least one RLC bearer on the SL 2 based on second identifier information of each RLC bearer after 1: N bearer mapping.

Optionally, the processing module 910 is further configured to determine the configuration information of the at least one RLC bearer on the SL 2 based on second QoS parameter information on the SL 2 after 1:1 bearer mapping.

The processing module 910 is configured to establish a bearer on the SL 2 based on second parameter information.

The transceiver module 920 is configured to receive a first message sent by a first communication apparatus.

The transceiver module 920 is further configured to send a second message to a second communication apparatus. Optionally, the second message includes the configuration information of the at least one RLC bearer on the SL 2. Optionally, the second message includes third identifier information.

The transceiver module 920 is further configured to receive a first data unit sent by the first communication apparatus.

The transceiver module 920 is further configured to send a second data unit to the second communication apparatus.

The foregoing is merely a partial example when the communication apparatus 900 is configured to implement the function of the relay communication apparatus in the method embodiment shown in FIG. 3, FIG. 4, FIG. 5, FIG. 6, or FIG. 7. For functions of the processing module 910 and the transceiver module 920 in the communication apparatus 900, refer to the operations of the relay communication apparatus in the method embodiment shown in FIG. 3, FIG. 4, FIG. 5, FIG. 6, or FIG. 7.

As shown in FIG. 10, a communication apparatus 1000 includes a processing module 1010 and a transceiver module 1020. The communication apparatus 1000 is configured to implement a function of the second communication apparatus in the embodiment corresponding to FIG. 3, FIG. 4, FIG. 5, FIG. 6, or FIG. 7.

When the communication apparatus 1000 is configured to implement the function of the second communication apparatus in the method embodiment shown in FIG. 3, FIG. 4, FIG. 5, FIG. 6, or FIG. 7, for example, the processing module 1010 is configured to establish a bearer on an SL 2 based on configuration information of at least one RLC bearer on the SL 2.

Optionally, the processing module 1010 is configured to correctly map a received data packet to a corresponding PDCP entity.

The transceiver module 1020 is configured to receive a second message sent by the second communication apparatus.

The transceiver module 1020 is configured to receive a second data unit sent by the second communication apparatus.

The foregoing is merely a partial example when the communication apparatus 1000 is configured to implement the function of the second communication apparatus in the method embodiment shown in FIG. 3, FIG. 4, FIG. 5, FIG. 6, or FIG. 7. For functions of the processing module 1010 and the transceiver module 1020 in the communication apparatus 1000, refer to the operations of the second communication apparatus in the method embodiment shown in FIG. 3, FIG. 4, FIG. 5, FIG. 6, or FIG. 7.

For specific descriptions of related information about the first message, the second message, the third message, the configuration information of the at least one RLC bearer on the SL 1, the configuration information of the at least one RLC bearer on the SL 2, the first configuration information, the first identifier, the third identifier, the first QoS parameter, the second QoS parameter, the third QoS parameter, and the fourth QoS parameter, refer to the descriptions in S400 in embodiments of this application.

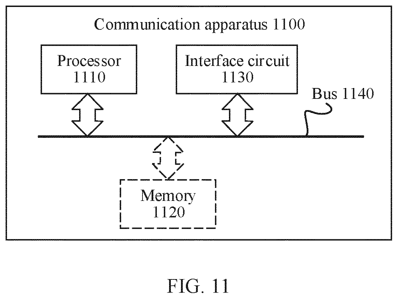

FIG. 11 is still another schematic block diagram of a communication apparatus according to an embodiment of this application. As shown in FIG. 11, a communication apparatus 1100 includes a processor 1110 and an interface circuit 1130. The processor 1110 and the interface circuit 1130 are coupled to each other. It may be understood that the interface circuit 1130 may be a transceiver or an input/output interface.

Optionally, the communication apparatus 1100 may further include a memory 1120, configured to store instructions executed by the processor 1120, store input data needed by the processor 1110 to run the instructions, or store data generated after the processor 1110 runs the instructions.

When the communication apparatus 1100 is configured to implement a function of the first communication apparatus shown in FIG. 3, FIG. 4, FIG. 5, FIG. 6, or FIG. 7, the processor 1110 is configured to implement a function of the processing module 810, and the interface circuit 1130 is configured to implement a function of the transceiver module 820.

When the communication apparatus 1100 is configured to implement a function of the relay communication apparatus shown in FIG. 3, FIG. 4, FIG. 5, FIG. 6, or FIG. 7, the processor 1110 is configured to implement a function of the processing module 910, and the interface circuit 1130 is configured to implement a function of the transceiver module 920.

When the communication apparatus 1100 is configured to implement a function of the second communication apparatus shown in FIG. 3, FIG. 4, FIG. 5, FIG. 6, or FIG. 7, the processor 1110 is configured to implement a function of the processing module 1010, and the interface circuit 1130 is configured to implement a function of the transceiver module 1020.

Optionally, the communication apparatus 1100 further includes a bus 1140. The processor 1110, the interface circuit 1130, and the memory 1120 may communicate with each other by using the bus 1140.

An embodiment of this application further provides a system chip. The system chip includes an input/output interface, at least one processor, at least one memory, and a bus. The at least one memory is configured to store instructions, and the at least one processor is configured to invoke the instructions in the at least one memory, to perform the operations in the methods in the foregoing aspects.

In embodiments of this application, it should be noted that the foregoing method embodiments in embodiments of this application may be applied to a processor, or be implemented by a processor. The processor may be an integrated circuit chip having a signal processing capability. In an implementation process, steps in the foregoing method embodiments may be implemented by using a hardware integrated logical circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed by a hardware decoding processor, or may be performed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification includes but is not limited to these memories and any memory of another proper type.

All or a part of the foregoing embodiments may be implemented by using software, hardware, firmware, or any combination thereof. When the software is used to implement embodiments, all or a part of embodiments may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic disk), an optical medium (for example, a DVD), a semiconductor medium (for example, a solid state drive (SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, a network device, or the like) to perform all or a part of the steps in the methods described in embodiments of this application. The storage medium includes any medium that can store program code, such as a USB flash drive, a removable hard disk, a read-only memory, a random access memory, a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a relay communication apparatus, a first message from a first communication apparatus, wherein the first message comprises first parameter information and configuration information of at least one radio link control (RLC) bearer on a first sidelink between the relay communication apparatus and the first communication apparatus, and the configuration information of the at least one RLC bearer on the first sidelink is determined based on first quality of service (QoS) parameter information on the first sidelink; and
sending, by the relay communication apparatus, a second message to a second communication apparatus, wherein the second message comprises configuration information of one RLC bearer on a second sidelink between the relay communication apparatus and the second communication apparatus, and the configuration information of the one RLC bearer on the second sidelink is determined based on the first parameter information.

2. The method according to claim 1, wherein the first message further comprises first identifier information, and the first identifier information identifies the second communication apparatus.

3. The method according to claim 1 or 2, wherein
the first parameter information comprises second QoS parameter information, and the second QoS parameter information comprises a QoS parameter that should be met by a QoS flow of the at least one RLC bearer when the QoS flow (flow) of the at least one RLC bearer on the first sidelink is transmitted on the second sidelink; or
the first parameter information comprises second identifier information, the second identifier information comprises PC5 quality of service flow identifier (PFI) information corresponding to the at least one RLC bearer on the first sidelink, the PFI information is used by the relay communication apparatus to determine second QoS parameter information, and the second QoS parameter information comprises a QoS parameter that should be met by a QoS flow of the at least one RLC bearer when the QoS flow (flow) of the at least one RLC bearer on the first sidelink is transmitted on the second sidelink.

4. The method according to claim 3, wherein the method further comprises:
determining, by the relay communication apparatus, third QoS parameter information based on the second QoS parameter information, wherein the third QoS parameter information is used by the relay communication apparatus to determine the configuration information of the one RLC bearer on the second sidelink.

5. The method according to claim 4, wherein first QoS parameter information and the third QoS parameter information meet a requirement of fourth QoS parameter information, and the fourth QoS parameter information is QoS parameter information that needs to be met when the first communication apparatus sends data to the second communication apparatus.

6. The method according to claim 5, wherein the determining, by the relay communication apparatus, third QoS parameter information based on the second QoS parameter information comprises any one of the following:
selecting, from the second QoS parameter information, QoS parameter information corresponding to a QoS flow having a highest priority as the third QoS parameter information;
selecting, from the second QoS parameter information, QoS parameter information corresponding to a QoS flow having a lowest packet delay budget as the third QoS parameter information;
selecting, from the second QoS parameter information, QoS parameter information corresponding to a QoS flow having a requirement for a highest guaranteed flow bit rate as the third QoS parameter information;
selecting, from the second QoS parameter information, QoS parameter information corresponding to a QoS flow having a requirement for a lowest packet error rate as the third QoS parameter information;
selecting, from the second QoS parameter information, QoS parameter information having a highest requirement on each item as the third QoS parameter information; or
selecting, from the second QoS parameter information, an average value of one or more QoS parameters as the third QoS parameter information.

7. The method according to any one of claims 4 to 6, wherein the method further comprises:
determining, by the relay communication apparatus, the configuration information of the one RLC bearer on the second sidelink based on the third QoS parameter information; and
the determining, by the relay communication apparatus, the configuration information of the one RLC bearer on the second sidelink based on the third QoS parameter information comprises any one of the following operations:
when the relay communication apparatus is in a connected state, sending, by the relay communication apparatus, the third QoS parameter information to a network device, and receiving, by the relay communication apparatus, the configuration information that is of the one RLC bearer on the second sidelink and that is determined by the network device based on the third QoS parameter information;
when the relay communication apparatus is in an idle state or an inactive state, determining, by the relay communication apparatus, the configuration information of the one RLC bearer on the second sidelink based on bearer configuration information in a system message broadcast by a network device; or
when the relay communication apparatus is located outside a cell coverage area, determining, by the relay communication apparatus, the configuration information of the one RLC bearer on the second sidelink based on preconfigured bearer configuration information.

8. The method according to any one of claims 1 to 7, wherein the method further comprises:
receiving, by the relay communication apparatus, a first data unit from the first communication apparatus, wherein the first data unit carries third identifier information, and the third identifier information identifies a bearer between the first communication apparatus and the second communication apparatus; and
sending, by the relay communication apparatus, the first data unit to the second communication apparatus.

9. The method according to any one of claims 1 to 7, wherein the method further comprises:
the first message further comprises third identifier information, the third identifier information identifies a bearer between the first communication apparatus and the second communication apparatus, and there is a correspondence between the third identifier information and the at least one RLC bearer on the first sidelink.

10. The method according to claim 9, wherein the method further comprises:
receiving, by the relay communication apparatus, a first data unit from the first communication apparatus; and
sending, by the relay communication apparatus to the second communication apparatus, a first data unit to which the third identifier information is added.

11. A communication method, comprising:
generating, by a first communication apparatus, a first message; and
sending, by the first communication apparatus, the first message to a relay communication apparatus, wherein the first message comprises first parameter information and configuration information of at least one radio link control (RLC) bearer on a first sidelink, the first sidelink is a communication link between the first communication apparatus and the relay communication apparatus, the first parameter information is used to determine configuration information of one RLC bearer on a second sidelink between the relay communication apparatus and a second communication apparatus, and the configuration information of the at least one RLC bearer on the first sidelink is determined based on first quality of service (QoS) parameter information on the first sidelink.

12. The method according to claim 11, wherein the method further comprises:
sending, by the first communication apparatus, a third message to the second communication apparatus via the relay communication apparatus, wherein the third message comprises first configuration information, and the first configuration information comprises configuration information of the packet data convergence protocol (PDCP) and the service data adaptation protocol (SDAP) that are needed for transmission between the first communication apparatus and the second communication apparatus.

13. The method according to claim 12, wherein the third message further comprises third identifier information, the third identifier information identifies a bearer between the first communication apparatus and the second communication apparatus, and there is a correspondence between the third identifier information and the first configuration information.

14. The method according to any one of claims 11 to 13, wherein the first message further comprises first identifier information, and the first identifier information identifies the second communication apparatus.

15. The method according to any one of claims 11 to 14, wherein
the first parameter information comprises second QoS parameter information, and the second QoS parameter information comprises a QoS parameter requirement that should be met by a QoS flow of the at least one RLC bearer when the QoS flow (flow) of the at least one RLC bearer on the first sidelink is transmitted on the second sidelink; or
the first parameter information comprises second identifier information, the second identifier information comprises PC5 quality of service flow identifier (PFI) information corresponding to the at least one RLC bearer on the first sidelink, the PFI information is used by the relay communication apparatus to determine second QoS parameter information, and the second QoS parameter information comprises a QoS parameter requirement that should be met by a QoS flow of the at least one RLC bearer when the QoS flow (flow) of the at least one RLC bearer on the first sidelink is transmitted on the second sidelink.

16. The method according to any one of claims 11 to 15, wherein that the configuration information of the at least one RLC bearer on the first sidelink is determined based on first QoS parameter information on the first sidelink comprises:
when the first communication apparatus is in a connected state, sending, by the first communication apparatus, the first QoS parameter information to a network device, and receiving, by the first communication apparatus, the configuration information that is of the at least one RLC bearer on the first sidelink and that is determined by the network device based on the first QoS parameter information;
when the first communication apparatus is in an idle state or an inactive state, determining, by the first communication apparatus, the configuration information of the at least one RLC bearer on the first sidelink based on bearer configuration information in a system message broadcast by a network device; or
when the first communication apparatus is located outside a cell coverage area, determining, by the first communication apparatus, the configuration information of the at least one RLC bearer on the first sidelink based on preconfigured bearer configuration information.

17. The method according to any one of claims 11 to 16, wherein the method further comprises:
sending, by the first communication apparatus, a first data unit to the relay communication apparatus, wherein the first data unit carries the third identifier information, and the third identifier information identifies the bearer between the first communication apparatus and the second communication apparatus.

18. The method according to any one of claims 11 to 16, wherein the first message further comprises the third identifier information, the third identifier information identifies the bearer between the first communication apparatus and the second communication apparatus, and there is a correspondence between the third identifier information and the at least one RLC bearer on the first sidelink.

19. A communication method, comprising:
receiving, by a second communication apparatus, a second message from a relay communication apparatus, wherein the second message comprises configuration information of one radio link control (RLC) bearer on a second sidelink between the second communication apparatus and the relay communication apparatus; and
performing, by the second communication apparatus, communication with the relay communication apparatus based on the configuration information of the one RLC bearer on the second sidelink.

20. The method according to claim 19, comprising: receiving, by the second communication apparatus, a third message from a first communication apparatus, wherein the third message comprises first configuration information, wherein
the first configuration information comprises configuration information of the packet data convergence protocol (PDCP) and the service data adaptation protocol (SDAP) that are needed for transmission between the first communication apparatus and the second communication apparatus.

21. The method according to claim 20, wherein the third message further comprises third identifier information, the third identifier information identifies a bearer between the first communication apparatus and the second communication apparatus, and there is a correspondence between the third identifier information and the first configuration information.

22. The method according to any one of claims 19 to 21, wherein the method further comprises:
receiving, by the second communication apparatus, a first data unit from the relay communication apparatus, wherein the first data unit carries the third identifier information, and there is the correspondence between the third identifier information and the first configuration information.

23. A communication apparatus, used in a relay communication apparatus, comprising a module configured to perform the method according to any one of claims 1 to 10.

24. A communication apparatus, used in a first communication apparatus, comprising a module configured to perform the method according to any one of claims 11 to 18.

25. A communication apparatus, used in a second communication apparatus, comprising a module configured to perform the method according to any one of claims 19 to 22.

26. A communication apparatus, used in a relay communication apparatus, comprising a processor and an interface circuit, wherein the interface circuit is configured to receive a signal from an apparatus other than the apparatus and transmit the signal to the processor, or send a signal from the processor to an apparatus other than the apparatus; and the processor is configured to implement the method according to any one of claims 1 to 10 by using a logic circuit or executing code instructions.

27. A communication apparatus, used in a first communication apparatus, comprising a processor and an interface circuit, wherein the interface circuit is configured to receive a signal from an apparatus other than the apparatus and transmit the signal to the processor, or send a signal from the processor to an apparatus other than the apparatus; and the processor is configured to implement the method according to any one of claims 11 to 18 by using a logic circuit or executing code instructions.

28. A communication apparatus, used in a second communication apparatus, comprising a processor and an interface circuit, wherein the interface circuit is configured to receive a signal from an apparatus other than the apparatus and transmit the signal to the processor, or send a signal from the processor to an apparatus other than the apparatus; and the processor is configured to implement the method according to any one of claims 19 to 22 by using a logic circuit or executing code instructions.

29. A computer-readable storage medium, wherein the computer-readable storage medium stores a computer program or instructions; and when the computer program or the instructions are executed by a communication apparatus, the method according to any one of claims 1 to 10 is implemented, the method according to any one of claims 11 to 18 is implemented, or the method according to any one of claims 19 to 22 is implemented.

30. A computer program product, wherein when the computer program product is executed by a communication apparatus, the method according to any one of claims 1 to 10 is implemented, the method according to any one of claims 11 to 18 is implemented, or the method according to any one of claims 19 to 22 is implemented.

31. A communication system, comprising one or more of the following: the communication apparatus according to any one of claims 23 to 28.
